(19) Europäisches Patentamt
European Patent Office
Office européen des brevets

(11) **EP 2 088 074 A1**

(12) **EUROPEAN PATENT APPLICATION**
published in accordance with Art. 153(4) EPC

(43) Date of publication:
**12.08.2009 Bulletin 2009/33**

(51) Int Cl.:
**B63B 9/00** (2006.01)

(21) Application number: **06821928.6**

(22) Date of filing: **18.10.2006**

(86) International application number:
**PCT/JP2006/320734**

(87) International publication number:
**WO 2008/047424 (24.04.2008 Gazette 2008/17)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Hitachi Zosen Corporation**
**Osaka-shi, Osaka 559-8559 (JP)**

(72) Inventor: **SUGIMOTO, Iwao**
**Osaka 559-8559 (JP)**

(74) Representative: **Engelhardt, Harald**
**Le Vrang & Engelhardt**
**Fliederstrasse 1**
**85139 Wettstetten (DE)**

(54) **METHOD AND DEVICE FOR EVALUATING SHAFTING ALIGNMENT OF SHIP**

(57) An evaluation map showing the allowable ranges (A) of the crank deflection and bearing loads determined according to the inclination of the crankshaft of an engine and the intermediate shaft is prepared beforehand. When the engine is installed in a ship, the inclination of the shafts within the allowable ranges can be easily known. While the ship is in service, the shafting alignment of the ship can be evaluated by merely measuring the inclination of the crankshaft and the intermediate shaft.

FIG. 11

**Description**

Technical Field

The present invention relates to a method and device for evaluating shafting alignment in a marine engine.

Background Art

when installing an engine that is a main engine and a propeller shaft in a ship, it is necessary to accurately align shaft-center positions of drive shafting made up of a crankshaft of the engine, an intermediate shaft and a propeller shaft or, in other words, perform shafting alignment.

As a method capable of accurately performing such shafting alignment, the present inventors have proposed a method for detecting the position of drive shafting (for example, refer to Japanese Patent Laid-Open No. 2003-19997 (also referred to herein as Patent Document 1)).

The aforementioned position detecting method will now be briefly described. First, a crankshaft is modeled and respective bearing positions are presupposed. The state quantity (displacement and acting force) of the fore bearing of the crankshaft is transferred to an aft-side using a field transfer matrix and a point transfer matrix made known according to the specification data of an engine, a boundary matrix that is a boundary condition on a fore side, and a boundary matrix on the aft side. The state quantity of the fore bearing which is an unknown is calculated, whereby the result thereof is then used to calculate a crank deflection, and an error (evaluated value) is calculated through a comparison between the calculated value and the actual measured value of the crank deflection. Next, while randomly varying the presupposed respective bearing positions, the same calculations as the above-described are performed to repeatedly calculate an error between the calculated value and the actual measured value of crank deflections in the respective bearing positional conditions in order to determine a bearing positional condition in which the error is reduced (i.e., evaluation is improved). Accordingly, an installation position is accurately estimated.

Disclosure of the Invention

Unfortunately, according to the method for detecting the position of drive shafting described above, while the current installation position of a bearing can be accurately estimated, an evaluation as to whether the estimated bearing position is appropriate or not cannot be made.

In consideration thereof, an object of the present invention is to provide an evaluating method and an evaluating device capable of readily evaluating the installation position of a bearing as shafting alignment regardless of whether a ship is already in service or newly built.

In order to solve the problem described above, a first shafting alignment evaluating method according to the present invention is a method of evaluating the alignment of drive shafting of a ship including a crankshaft of an engine, an intermediate shaft, and a propeller shaft, the method including:

calculating a displacement at a predetermined portion of the drive shafting using a transfer matrix method based on the inclination of the crankshaft and the inclination of the intermediate shaft; and
calculating the crank deflection of the crankshaft based on the displacement and evaluating the alignment of the drive shafting by comparing the calculated crank deflection with a preset evaluation condition.

In addition, a second shafting alignment evaluating method according to the present invention is a method of evaluating the alignment of drive shafting of a ship including a crankshaft of an engine, an intermediate shaft, and a propeller shaft, the method including:

calculating a displacement at a predetermined portion of the drive shafting using a transfer matrix method based on the inclination of the crankshaft and the inclination of the intermediate shaft; and
calculating a bearing load acting on each bearing based on the displacement and evaluating the alignment of the drive shafting by comparing the calculated bearing loads with a preset evaluation condition.

Furthermore, a third shafting alignment evaluating method according to the present invention is a method of evaluating the alignment of drive shafting of a ship including a crankshaft of an engine, an intermediate shaft, and a propeller shaft, the method including:

calculating a displacement at a predetermined portion of the drive shafting using a transfer matrix method based on the inclination of the crankshaft and the inclination of the intermediate shaft; and

calculating the crank deflection of the crankshaft and a bearing load acting on each bearing based on the displacement and evaluating the alignment of the drive shafting by comparing the calculated crank deflection and bearing loads with a preset evaluation condition.

Moreover, a fourth shafting alignment evaluating method according to the present invention is a method of evaluating the alignment of drive shafting of a ship including a crankshaft of an engine, an intermediate shaft, and a propeller shaft, the method including:

calculating a displacement at a predetermined portion of the drive shafting using a transfer matrix method based on the inclination of the crankshaft and the inclination of the intermediate shaft, and calculating the crank deflection of the crankshaft and a bearing load acting on each bearing based on the displacement; and evaluating the alignment of the drive shafting using an evaluation map created by plotting the calculated crank deflection and bearing loads on two-dimensional coordinates having the inclination of the crankshaft and the inclination of the intermediate shaft corresponding to an evaluation condition as coordinate axes thereof.

In addition, a first shafting alignment evaluating device according to the present invention is an evaluating device for performing the first evaluating method described above, the device including:

a data input unit for inputting the specification data of drive shafting and data regarding an evaluation condition and the inclination of a crankshaft of an engine and the inclination of an intermediate shaft;
a bearing position calculating unit for calculating respective bearing positions in the drive shafting using the specification data;
a shafting displacement calculating unit for calculating a displacement at a predetermined portion of the drive shafting using a transfer matrix method, based on the bearing positions calculated by the bearing position calculating unit and the specification data;
an evaluation index calculating unit for calculating an evaluation index using the displacement calculated by the shafting displacement calculating unit;
an evaluating unit for performing an evaluation by comparing the evaluation index calculated by the evaluation index calculating unit and the evaluation condition; and
an output unit for outputting an evaluation result obtained by the evaluating unit, wherein
the bearing position calculating unit includes at least a bearing height calculating unit for calculating a bearing height with respect to a height reference position;
the shafting displacement calculating unit calculates the displacement of a portion corresponding to the intersection of a crank arm and a journal on the crankshaft;
the evaluation index calculating unit includes a crank deflection calculating unit for calculating a crank deflection based on the displacement of the portion corresponding to the intersection, and
the evaluating unit includes a crank deflection evaluating unit for performing an evaluation by comparing a crank deflection calculated as an evaluation index by the evaluation index calculating unit with the evaluation condition.

In addiction, a second shafting alignment evaluating device according to the present invention is the first evaluating device described above, wherein the bearing position calculating unit of the first evaluating device is provided with a bearing horizontal position calculating unit for calculating the horizontal position of a bearing with respect to a horizontal reference position.

Furthermore, a third shafting alignment evaluating device according to the present invention is an evaluating device for performing the second evaluating method described above, the device including:

a data input unit for inputting the specification data of drive shafting and data regarding an evaluation condition and the inclination of a crankshaft of an engine and the inclination of an intermediate shaft;
a bearing position calculating unit for calculating respective bearing positions in the drive shafting using the specification data;
a shafting displacement calculating unit for calculating a displacement at a predetermined portion of the crankshaft using the bearing positions calculated by the bearing position calculating unit and data regarding the crankshaft and the intermediate shaft among the specification data;
an evaluation index calculating unit for calculating an evaluation index using the displacement calculated by the shafting displacement calculating unit;
an evaluating unit for performing an evaluation by comparing the evaluation index calculated by the evaluation index calculating unit and the evaluation condition; and
an output unit for outputting an evaluation result obtained by the evaluating unit, wherein

the bearing position calculating unit includes a bearing height calculating unit for calculating a bearing height with respect to a height reference position;

the shafting displacement calculating unit outputs a shaft displacement within each bearing;

the evaluation index calculating unit includes a bearing load calculating unit for calculating a bearing load based on the shaft displacement, and

the evaluating unit includes a bearing load evaluating unit for performing an evaluation by comparing the bearing load calculated by the evaluation index calculating unit with the evaluation condition.

Moreover, a fourth shafting alignment evaluating device according to the present invention is an evaluating device for performing the third evaluating method described above, the device including:

a data input unit for inputting the specification data of drive shafting and data regarding an evaluation condition and the inclination of a crankshaft of an engine and the inclination of an intermediate shaft;

a bearing position calculating unit for calculating respective bearing positions of the crankshaft, the intermediate shaft and a propeller shaft using the specification data;

a shafting displacement calculating unit for calculating a displacement at a predetermined portion of the crankshaft using the bearing positions calculated by the bearing position calculating unit and data regarding the crankshaft and the intermediate shaft among the specification data;

an evaluation index calculating unit for calculating an evaluation index using the displacement calculated by the shafting displacement calculating unit;

an evaluating unit for performing an evaluation by comparing the evaluation index calculated by the evaluation index calculating unit and the evaluation condition; and

an output unit for outputting an evaluation result obtained by the evaluating unit, wherein

the bearing position calculating unit includes a bearing height calculating unit for calculating a bearing height with respect to a height reference position;

the shafting displacement calculating unit outputs the displacement of a portion corresponding to the intersection of a crank arm and a journal as well as the displacements of respective bearings,

the evaluation index calculating unit includes a crank deflection calculating unit for calculating a crank deflection based on the displacement of the portion corresponding to the intersection and a bearing load calculating unit for calculating a bearing load based on the displacements of the bearings, and

the evaluating unit includes a crank deflection evaluating unit and a bearing load evaluating unit for performing an revaluation by comparing a crank deflection and bearing loads calculated by the evaluation index calculating unit with respective evaluation conditions.

In addition, a fifth shafting alignment evaluating device according to the present invention is an evaluating device for performing the third evaluating method described above, the device including:

a data input unit for inputting the specification data of drive shafting and data regarding an evaluation condition and the inclination of a crankshaft of an engine and the inclination of an intermediate shaft;

a bearing position calculating unit for calculating respective bearing positions of the crankshaft, the intermediate shaft and a propeller shaft using the specification data;

a shafting displacement calculating unit for calculating a displacement at a predetermined portion of the crankshaft using the bearing positions calculated by the bearing position calculating unit and data regarding the crankshaft and the intermediate shaft among the specification data;

an evaluation index calculating unit for calculating an evaluation index using the displacement calculated by the shafting displacement calculating unit;

an evaluating unit for performing an evaluation by comparing the evaluation index calculated by the evaluation index calculating unit and the evaluation condition; and

an output unit for outputting an evaluation result obtained by the evaluating unit, wherein

the bearing position calculating unit includes a bearing height calculating unit for calculating a bearing height with respect to a height reference position and a bearing horizontal position calculating unit for calculating the horizontal position of a bearing with respect to a horizontal reference position,

the shafting displacement calculating unit outputs the displacement of a portion corresponding to the intersection of a crank arm and a journal as well as the displacements of respective bearings,

the evaluation index calculating unit includes a crank deflection calculating unit for calculating vertical and horizontal crank deflections based on the displacement of the portion corresponding to the intersection and a bearing load calculating unit for calculating a bearing load based on the displacements of the bearings, and

the evaluating unit includes a crank deflection evaluating unit for performing an evaluation by comparing the vertical and horizontal crank deflections calculated by the evaluation index calculating unit with respective evaluation conditions and a bearing load evaluating unit for performing an evaluation by comparing the bearing load calculated by the evaluation index calculating unit with an evaluation condition.

Furthermore, a sixth evaluating device of the shafting alignment of a ship according to the present invention is any one of the first to fifth evaluating devices described above, wherein at least a printing unit or a display screen unit of the data input unit and the output unit of the evaluating device is provided at a terminal, and other components are provided at a server device connected to the terminal via a network.

Moreover, a seventh evaluating device of the shafting alignment of a ship according to the present invention is any one of the first to fifth evaluating devices described above, wherein the bearing position calculating unit includes a combination generating unit for generating, when the data regarding the inclination of the crankshaft and the inclination of the intermediate shaft are respectively inputted as numerical ranges, the combination data of the inclination within the numerical ranges and calculates a bearing position for the combination of the inclination generated by the combination generating unit, and

the output unit includes an evaluation map creating unit for outputting an evaluation map which displays an evaluation result of each inclination combination on a plane of two-dimensional coordinates.

According to the evaluating methods and the evaluating devices described above, shafting alignment (installed state) can be readily evaluated by merely calculating the inclination of a crankshaft of an engine and the inclination of an intermediate shaft. For example, when building a ship, shafting alignment design can be readily evaluated when installing an engine, a propeller shaft or the like in a hull, and in the case of a ship already in service, an evaluation of current shafting, alignment can be readily performed.

In addition, since the use of an evaluation map enables a combination of each shaft inclination which keeps the crank deflection and bearing loads of engine shafting within an appropriate range to be readily known, even those inexperienced in shafting alignment design can now readily provide suitable design values.

Brief Description of the Drawings

FIG. 1 is a schematic diagram showing the general configuration of drive shafting according to a first embodiment of the present invention;

FIG. 2 is a schematic front view of a single crank throw of a crankshaft in the drive shafting according to the first embodiment of the present invention;

FIG. 3 is a schematic side view showing a local coordinate system of the crankshaft according to the first embodiment of the present invention;

FIG. 4 is a schematic diagram explaining the calculation procedure of a crank deflection of the crankshaft according to the first embodiment of the present invention;

FIG. 5 is an explanatory diagram of the vertical displacement of the drive shafting according to the first embodiment of the present invention, wherein (a) is a schematic view of the drive shafting, (b) is a graph showing initial shafting alignment, (c) is a graph showing the hull sag of an engine room double bottom, and (d) is a graph showing a deformation of an engine due to thermal expansion;

FIG. 6 is an explanatory diagram of the horizontal displacement of the drive shafting according to the first embodiment of the present invention, wherein (a) is a schematic diagram of the drive shafting, and (b) is a graph showing initial shafting alignment;

FIG. 7 is a flowchart for calculating a state quantity using the evaluating method according to the first embodiment of the present invention;

FIG. 8 is a diagram for explaining a procedure for creating a crank deflection evaluation map using the evaluating method according to the first embodiment of the present invention;

FIG. 9 is an evaluation map showing an allowable range of the crank deflection according to the first embodiment of the present invention;

FIG. 10 is a diagram for explaining a procedure for creating a bearing load evaluation map using the evaluating method according to the first embodiment of the present invention;

FIG. 11 is an evaluation map showing an allowable range of the bearing load according to the first embodiment of the present invention;

FIG. 12 is an evaluation map showing allowable ranges of the crank deflection and bearing load according to the first embodiment of the present invention;

FIG. 13 is an evaluation map showing an allowable range of a horizontal crank deflection under the evaluating method according to the first embodiment of the present invention;

FIG. 14 is a block diagram showing the general configuration of the evaluating device according to the first embodiment of the present invention; and

FIG. 15 is a block diagram showing the general configuration of an evaluating device according to a second embodiment of the present invention.

Best Mode for Carrying Out the Invention

First Embodiment

A method and a device for evaluating the shafting, alignment of a ship according to a first embodiment of the present invention will now be described.

First, an outline of a shafting alignment evaluating method according to the present invention will be presented.

In simple terms, the present invention is achieved so that an evaluation of shafting alignment is performed based on the inclination of a crankshaft (also referred to as an engine shaft) and the inclination of an intermediate shaft of an engine of a ship, and, furthermore, such an evaluation can be readily performed using an evaluation map.

The evaluation map is a map in a two-dimensional plane whose coordinate axes are the inclination of the crankshaft and the inclination of the intermediate shaft and which is an easily understandable graphic representation (visualization) of which evaluation level a crank deflection of the engine calculated in response to each inclination and bearing loads acting on bearings provided on the crankshaft and the intermediate shaft correspond to.

When calculating a crank deflection based on the inclination of the crankshaft and the intermediate shaft, a transfer matrix method is used to calculate a state quantity (displacement and acting force) at a predetermined position in drive shafting (also simply referred to as shafting) including the crankshaft, the intermediate shaft, and a propeller shaft, whereby a crank deflection is calculated using the displacement among the state quantity. In addition, the following are taken into consideration when calculating each inclination: the rigidity of the double bottom portion (hereinafter referred to as a double bottom) of a hull; the operating state of the engine such as a cold state in which the engine is not in operation and a hot state in which the engine is in operation; and a loading state during a hot state, that is, an unloaded state corresponding to an empty ship, a ballasted state, and a fully-loaded state corresponding to a loaded ship. In other words, the present invention has been considered so as to be capable of accommodating to both a newly-built ship and a ship in service with high accuracy.

First, the basic configuration of a hull will be described, followed by a description of a method for calculating a bearing displacement (amount of displacement) with respect to a reference position as an initial value necessary for calculation from the inclination of the crankshaft and the intermediate shaft with respect to a reference line in each of the states described above. Furthermore, a transfer matrix method will be described in which the bearing displacement as an initial value is used to calculate a state quantity which becomes necessary for calculating a crank deflection and a bearing load.

Incidentally, bearing displacements occur in both vertical and horizontal directions. A height reference line (an example of a height reference position) is used as a reference position in the vertical direction, while a horizontal reference line (an example of a horizontal reference position) is used as a reference position in the horizontal direction. When either one or both of the reference lines in the vertical and horizontal directions are included, the term "reference position" is used. In addition, a bearing displacement in the vertical direction with respect to the height reference line shall be referred to as a "bearing height"; while a bearing displacement in the horizontal direction with respect to the horizontal reference line shall be referred to as a "bearing horizontal position".

Furthermore, crank deflections also occur in both vertical and horizontal directions, and calculations in both directions may be performed at the same time. However, since vertical and horizontal crank deflections can be calculated separately with hardly any difficulty, it shall be assumed hereinafter that a vertical crank deflection is calculated first, followed by a calculation of a horizontal crank deflection.

An overall procedure is briefly described as follows. The vertical displacement and/or the horizontal displacement of each bearing with respect to the reference position is calculated as an initial value from the inclination of the crankshaft and an inclination of the intermediate shaft with respect to the reference line. The state quantity (displacement and acting force) at the predetermined position in the shafting is calculated based on the initial value using a transfer matrix method. The displacement among the state quantity is used to calculate a crank deflection and a bearing load, whereby a map is created which represents a relationship between the inclination of the crankshaft and the intermediate shaft and the evaluation level of the calculated crank deflection and bearing load.

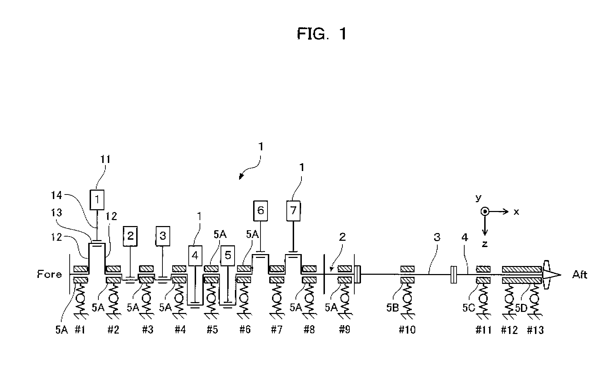

(1) First, a hull structure will be briefly described with reference to FIG. 1.

Normally, the bottom portion of a large ship has a double bottom structure. As shown in FIG. 1, an engine 1 is disposed at the double bottom portion, and an intermediate shaft 3 and a propeller shaft 4 are disposed in this order facing an aft side. A crankshaft 2 of the engine 1, the intermediate shaft 3, and the propeller shaft 4 (the intermediate shaft and the propeller shaft may also be collectively referred to as a propulsion shaft) form drive shafting.

The arrangement of bearings in the drive shafting will now be described.

As for the engine 1, an example in which the crankshaft 2 is rotated by seven pistons will be described.

That is, while eight bearings 5A are provided for the crankshaft 2 of the engine 1, an aft rear end portion is supported by a bearing 5A further provided on a bulkhead, the intermediate shaft 3 is supported by a bearing 5B provided at the intermediate position of the intermediate shaft 3, and the propeller shaft 4 is supported by two aft-tube bearings, namely, a fore aft-tube bearing 5C and an aft aft-tube bearing 5D. Moreover, while the crankshaft 2 is supported by bearings #1 to #8 disposed on the engine itself, an aft end portion of the crankshaft 2 is also supported by a #9 bearing provided on a bulkhead.

Therefore, the drive shafting is provided with the #1 to #9 bearings 5A disposed at nine locations of the crankshaft 2, the #10 bearing 5B disposed at one location of the intermediate shaft 3, and the #11 to #12 bearings 5C and 5D disposed at two locations of the propeller shaft 4. Among the bearings 5A of the crankshaft 2, #1 denotes a fore bearing while #9 denotes an aft bearing. As a matter of course, at positions corresponding to respective pistons 11 of the crankshaft 2, a crankpin 13 is provided via a crank arm 12 and the crankpin 13 and the piston 11 are connected to each other via a connecting rod 14.

(2) Next, an outline of the transfer matrix method will be given.

A method of calculating a displacement among a state quantity in predetermined positions (hereinafter also referred to as respective portions) of the crankshaft 2 of the engine 1 with the transfer matrix method will be described.

In this transfer matrix method, when calculating displacements of respective portions across the entire crankshaft 2, a field transfer matrix equation (whose coefficient is referred to as a field transfer matrix) is used for transferring a displacement on a straight section such as a beam, and a point transfer matrix equation (whose coefficient is referred to as a point transfer matrix) is used for transferring a displacement on a supporting portion (a changing point of a bearing or a changing point in an axial direction) which interrupts the continuity of the beam.

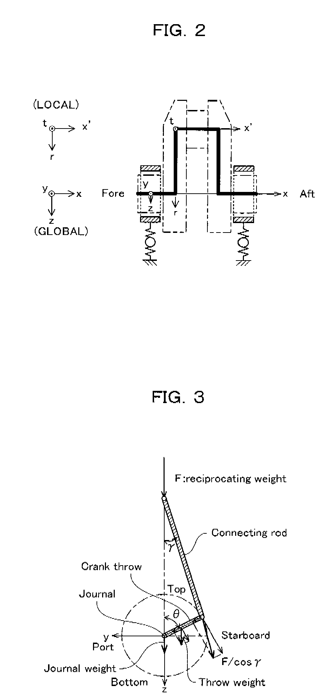

In the following description, as shown in FIG. 2, the transfer matrix method is applied along the crankshaft 2. The direction along the crankshaft center (the shaft center of a journal) is set as a global coordinate system (expressed by x, y, and z and also referred to as an absolute coordinate system), while the direction along the crank arm 12 and the crankpin 13 is set as a local coordinate system (expressed by x', t, and r and also referred to as a relative coordinate system). Moreover, FIG. 2 shows how global coordinate axes are set for a single crank throw, and FIG. 3 shows a decomposition of force acting on the crank throw on the local coordinate system.

In the description below, the following reference characters shall be used unless noted otherwise. These values are to be inputted from, for example, a data input unit (to be described later).

a: initial length between crank arms
A: cross-sectional area
$D_d$: distance between crank arms
Def: crank deflection
E: modulus of longitudinal elasticity
F: shearing force
C: modulus of shearing elasticity
I: geometrical moment of inertia
J: polar moment of inertia of area
K: constant of spring at bearing
L: length
M: bending moment
T: torsional moment
$\theta$: crank angle

First, as represented by the formula below, an equation is created with a state quantity (displacement and acting force) B on the fore bearing being set as an unknown. In the formula below, S denotes a field transfer matrix, P denotes a point transfer matrix, R denotes a boundary matrix indicating a fore boundary condition, and R' denotes an aft boundary matrix. The respective matrices are all known.

$R'S_{ns}P_{ns-1}S_{ns-1} \ldots P_1 S_1 RB = 0$

The subscript ns in the formula given above indicates the number of sections in which the shaft between fore and aft shaft ends is divided by the bearings provided therebetween.

The fore state quantity B is calculated by solving the formula. The state quantity B is equivalent to a displacement vector q and a force vector Q which will be discussed later. Hereinafter, the field transfer matrix equation and the point transfer matrix equation are repeatedly applied with the state quantity serving as an initial value in order to calculate state quantities over the entire crankshaft.

That is, the displacement vector q and the force vector Q, which are state quantities in the global coordinate system, are represented by formulas (1) and (2) given below, Note that the vectors in the formulas are indicated by boldface.

[Formula 1]

$$\mathbf{q} = \begin{bmatrix} d_x & d_y & d_z & \phi_x & \phi_y & \phi_z \end{bmatrix}^T \quad (1)$$

$$\mathbf{Q} = \begin{bmatrix} T_x & M_y & M_z & F_x & F_y & F_z \end{bmatrix}^T \quad (2)$$

In Formula (1), $d_x$, $d_y$, and $d_z$ denote a displacement, distortion, or the like, and $\phi_x$, $\phi_y$, and $\phi_z$ denote the angle of twist, the angle of deflection, or the like. In Formula (2), $T_x$, $M_y$, and $M_z$ denote twisting moment, bending moment, or the like, and $F_x$, $F_y$, and $F_z$ denote axial force, shearing force, or the like.

Furthermore, displacement vector q' and force vector Q', which are state quantities of the local coordinate system, are represented by Formulas (3) and (4) given below.

[Formula 2]

$$\mathbf{q}' = \begin{bmatrix} d_{x'} & d_t & d_r & \phi_{x'} & \phi_t & \phi_r \end{bmatrix}^T \quad (3)$$

$$\mathbf{Q}' = \begin{bmatrix} T_{x'} & M_t & M_r & F_{x'} & F_t & F_r \end{bmatrix}^T \quad (4)$$

Similarly, in Formula (3), $d_x$, $d_t$, and $d_r$ denote a displacement, distortion, or the like, and $\phi_x$, $\phi_t$, and $\phi_r$ denote the angle of twist, the angle of deflection, or the like. In Formula (4), $T_{x'}$, $M_t$, and $M_r$ denote twisting moment, bending moment, or the like, and $F_{x'}$, $F_t$, and $F_r$ denote axial force, shearing force, or the like.

Next, the field transfer matrix equation and the point transfer matrix equation that are used in the transfer matrix method will be described. The point transfer matrix equation for calculating a state quantity from the fore (indicated by a subscript "F") to the aft (indicated by a subscript "A") is represented by Formula (5) given below,

In Formula (5), i denotes a bearing number (the number of a shaft section divided by the bearings).

[Formula 3]

$$\begin{bmatrix} q \\ Q \\ 1 \end{bmatrix}_i^A = \begin{bmatrix} f_1 & f_2 & q_0^A \\ 0 & f_i & Q_0^A \\ 0 & 0 & 1 \end{bmatrix}_i \begin{bmatrix} q \\ Q \\ 1 \end{bmatrix}_i^F \quad (5)$$

where

$$f_1 = \begin{bmatrix} 1 & 0 & 0 & 0 & 0 & 0 \\ 0 & 1 & 0 & 0 & 0 & L \\ 0 & 0 & 1 & 0 & -L & 0 \\ 0 & 0 & 0 & 1 & 0 & 0 \\ 0 & 0 & 0 & 0 & 1 & 0 \\ 0 & 0 & 0 & 0 & 0 & 1 \end{bmatrix}$$

and

$$
f_2 = \begin{bmatrix} 0 & 0 & 0 & \dfrac{-L}{EA} & 0 & 0 \\[2mm] 0 & 0 & \dfrac{-L^2}{2EI_y} & 0 & \dfrac{L^3}{6EI_z} & 0 \\[2mm] 0 & \dfrac{L^2}{2EI_y} & 0 & 0 & 0 & \dfrac{L^3}{6EI_y} \\[2mm] \dfrac{-L}{GJ} & 0 & 0 & 0 & 0 & 0 \\[2mm] 0 & \dfrac{-L}{EI_y} & 0 & 0 & 0 & \dfrac{-L^2}{2EI_y} \\[2mm] 0 & 0 & \dfrac{-L}{EI_z} & 0 & \dfrac{L^2}{2EI_z} & 0 \end{bmatrix}
$$

Next, a coordinate conversion formula (transfer equation) for converting a state quantity from a global coordinate system to a local coordinate system is represented by Formula (6) given below.

[Formula 4]

$$
\begin{bmatrix} q' \\ Q' \\ 1 \end{bmatrix}_i = \begin{bmatrix} g_1 & 0 & 0 \\ 0 & g_1 & 0 \\ 0 & 0 & 1 \end{bmatrix} \begin{bmatrix} q \\ Q \\ 1 \end{bmatrix}_i \tag{6}
$$

where

$$
g_1 = \begin{bmatrix} 1 & 0 & 0 & 0 & 0 & 0 \\ 0 & \cos\theta & -\sin\theta & 0 & 0 & 0 \\ 0 & \sin\theta & \cos\theta & 0 & 0 & 0 \\ 0 & 0 & 0 & 1 & 0 & 0 \\ 0 & 0 & 0 & 0 & \cos\theta & -\sin\theta \\ 0 & 0 & 0 & 0 & \sin\theta & \cos\theta \end{bmatrix}
$$

Meanwhile, a coordinate conversion formula (transfer equation) for converting a state quantity from a local coordinate system to a global coordinate system is represented by Formula (7) given below.

[Formula 5]

$$
\begin{bmatrix} q \\ Q \\ 1 \end{bmatrix}_i = \begin{bmatrix} g_2 & 0 & 0 \\ 0 & g_2 & 0 \\ 0 & 0 & 1 \end{bmatrix} \begin{bmatrix} q' \\ Q' \\ 1 \end{bmatrix}_i \tag{7}
$$

where

$$
g_2 = \begin{bmatrix} 1 & 0 & 0 & 0 & 0 & 0 \\ 0 & \cos\theta & \sin\theta & 0 & 0 & 0 \\ 0 & -\sin\theta & \cos\theta & 0 & 0 & 0 \\ 0 & 0 & 0 & 1 & 0 & 0 \\ 0 & 0 & 0 & 0 & \cos\theta & \sin\theta \\ 0 & 0 & 0 & 0 & -\sin\theta & \cos\theta \end{bmatrix}
$$

For example, a coordinate conversion formula (transfer equation) from a journal to a crank arm is represented by Formula (8) given below.

[Formula 6]

$$\begin{bmatrix} q' \\ Q' \\ 1 \end{bmatrix}_{arm} = \begin{bmatrix} g_3 & 0 & 0 \\ 0 & g_3 & 0 \\ 0 & 0 & 1 \end{bmatrix} \begin{bmatrix} q' \\ Q' \\ 1 \end{bmatrix}_{journal} \qquad (8)$$

where

$$g_3 = \begin{bmatrix} 0 & 0 & -1 & 0 & 0 & 0 \\ 0 & 1 & 0 & 0 & 0 & 0 \\ 1 & 0 & 0 & 0 & 0 & 0 \\ 0 & 0 & 0 & 0 & 0 & -1 \\ 0 & 0 & 0 & 0 & 1 & 0 \\ 0 & 0 & 0 & 1 & 0 & 0 \end{bmatrix}$$

Furthermore, Formula (8) given above is also used for coordinate conversion from a crank arm to a journal.
Moreover, a coordinate conversion formula (transfer equation) from a crankpin to a crank arm is represented by Formula (9) given below, and coordinate conversion from a crank arm to a crank pin is also expressed by the same Formula (9) given below.
[Formula 7]

$$\begin{bmatrix} q' \\ Q' \\ 1 \end{bmatrix}_{pin} = \begin{bmatrix} g_4 & 0 & 0 \\ 0 & g_4 & 0 \\ 0 & 0 & 1 \end{bmatrix} \begin{bmatrix} q' \\ Q' \\ 1 \end{bmatrix}_{arm} \qquad (9)$$

where

$$g_4 = \begin{bmatrix} 0 & 0 & 1 & 0 & 0 & 0 \\ 0 & 1 & 0 & 0 & 0 & 0 \\ -1 & 0 & 0 & 0 & 0 & 0 \\ 0 & 0 & 0 & 0 & 0 & 1 \\ 0 & 0 & 0 & 0 & 1 & 0 \\ 0 & 0 & 0 & -1 & 0 & 0 \end{bmatrix}$$

Meanwhile, the point transfer matrix equation at each of the bearings is represented by Formula (10) given below.
[Formula 8]

$$\begin{bmatrix} q \\ Q \\ 1 \end{bmatrix}_{i+1}^{F} = \begin{bmatrix} 1 & 0 & 0 \\ h_1 & 1 & h_2 \\ 0 & 0 & 1 \end{bmatrix}_i \begin{bmatrix} q \\ Q \\ 1 \end{bmatrix}_i^{A} \qquad (10)$$

where

$$h_1 = \begin{bmatrix} 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & -k_y & 0 & 0 & 0 & 0 \\ 0 & 0 & -k_z & 0 & 0 & 0 \end{bmatrix}$$

$$h_2 = \begin{bmatrix} 0 & 0 & 0 & 0 & k_y d_{y0} & k_z d_{z0} \end{bmatrix}^T$$

Bearing height data is substituted into $d_{z0}$ of $h_2$ (as will be described later, when only a vertical displacement is calculated, $d_{y0}$ is to be set to "0 (zero)").

Next, a procedure for calculating a crank deflection will be described.

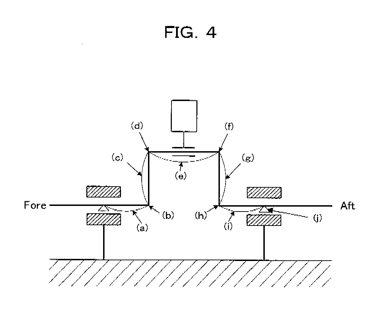

Here, when $d_{x1}$, $d_{y1}$, and $d_{z1}$ denote displacements on fore portions of a crank throw, $d_{x2}$, $d_{y2}$, and $d_{z2}$ denote displacements on aft portions of a crank throw, and a denotes the initial length of a crank throw, then a distance $D_d$ between adjacent crank throws may be represented by Formula (11) given below (where the subscript 1 with respect to d denoting a displacement, a deflection, or the like indicates a position (b) shown in FIG. 4 described later; and similarly, the subscript 2 indicates a position (h) shown in FIG. 4)

[Formula 9]

$$D_d = \sqrt{(a + d_{x2} - d_{x1})^2 + (d_{y2} - d_{y1})^2 + (d_{z2} - d_{z1})^2} \quad (11)$$

In addition, when Do denotes a distance on the top dead center (TDC, 0 degrees) of a piston and $D_{180}$ denotes a distance on the bottom dead center (BDC, 180 degrees) of a piston, then the crankshaft deflection (Def) is represented by Formula (12) given below.

[Formula 10]

$$\mathrm{Def} = D_0 - D_{180} \quad (12)$$

Since a is in the order of $5 \times 10^2$ mm and the respective amounts of displacement ($d_x$, $d_y$, and $d_z$) are in the order of $10^{-3}$ mm, Formula (11) given above may be transformed into Formula (13) given below.

[Formula 11]

$$D - a = \frac{2a(d_{x2} - d_{x1})}{D + a} + \frac{(d_{x2} - d_{x1})^2 + (d_{y2} - d_{y1})^2 + (d_{z2} - d_{z1})^2}{D + a}$$
$$= d_{x2} - d_{x1} \quad (13)$$

where

$$D + a = 2a$$
$$\frac{(d_{x2} - d_{x1})^2 + (d_{y2} - d_{y1})^2 + (d_{z2} - d_{z1})^2}{D + a} \ll d_{x2} - d_{x1}$$

Consequently, a crank deflection can be calculated by Formulas (14) and (15) given below. Here, Formula (14) represents the vertical.direction while Formula (15) represents the horizontal direction.

[Formula 12]

$$Def = (d_{x2} - d_{x1})_0 - (d_{x2} - d_{x1})_{180} \quad (14)$$

$$Def = (d_{x2} - d_{x1})_{90} - (d_{x2} - d_{x1})_{270} \quad (15)$$

As is apparent from Formulas (14) and (15), a crank deflection is primarily dependent on the amount of deformation in a crankshaft center direction.

A specific procedure for calculating a crank deflection based on the formulas provided above will now be described with reference to FIG. 4. Here, with a focus on a single crank throw, a calculating step for each member will be described in sequence.

Step A: The field transfer matrix equation represented by Formula (5) is used for a bearing at portion (a).

Step B: At a bent portion (b), the left side of Formula (5) in Step A is substituted into the right side of the coordinate conversion formula represented by Formula (6), and the left side of Formula (6) at this point is substituted into the right side (journal) of the coordinate conversion formula represented by Formula (8).

Step C: At portion (c), the left side of Formula (8) in Step B is substituted into the right side of Formula (5)

Step D: At portion (d), the left side of Formula (5) in Step C is substituted into the right side of the coordinate conversion formula represented by Formula (9).

Step E: At portion (e), the left side of Formula (9) in Step D is substituted into the right side of Formula (5).

Step F: At portion (f), the left side of Formula (5) in Step E is used as the left side of Formula (9).

Step G: At portion (g), the right side [q'Q'1] $T_{arm}$ of Formula (9) in Step F is substituted into Formula (5).

Step H: At portion (h), the left side of Formula (5) in Step G is used as the left side of Formula (8), and the right side [q'Q'1]$T_{journal}$ of Formula (8) at this point is substituted into the right side of the coordinate conversion formula represented by Formula (7).

Step I: At portion (i), the left side of Formula (7) in Step H is substituted into the right side of Formula (5) .

Furthermore, transfer from a crank throw to an adjacent crank throw (transfer in which a supporting point indicated in portion (j) serves as a boundary) is performed by using the point transfer matrix formula represented by Formula (10) and substituting the left side of Formula (5) in step I into the right side of Formula (10).

As shown above, the respective displacements are calculated by transferring the state quantities q and Q (Q = 0) from the fore side to the aft side using the respective transfer matrixes which are coefficients of the transfer formulas. As a matter of course, in the transfer process, Q also varies depending on $f_1$, $f_2$, $h_1$, and $h_2$ of Formula (5) and Formula (10).

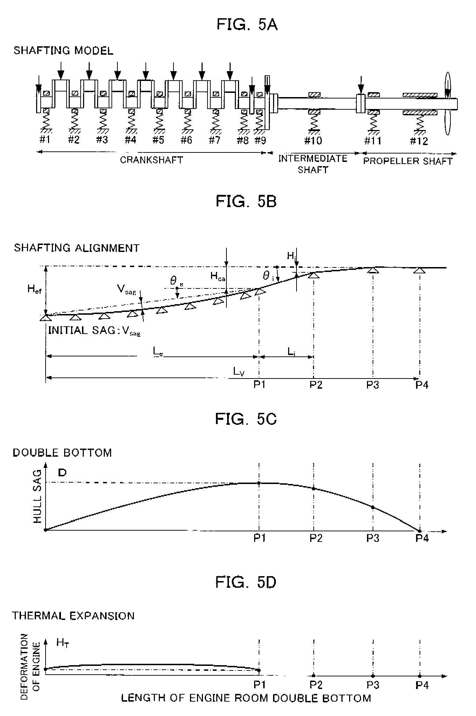

(3) Next, a method of calculating respective bearing positions as initial values when using the transfer matrix method or, in other words, formulas for calculating a bearing height that is a vertical displacement and a bearing horizontal position that is a horizontal displacement from the inclination of the crankshaft and the inclination of the intermediate shaft will be described with reference to FIG. 5.

First, definitions of reference characters and set values (coordinate values) used in the following formulas are as listed below. Incidentally, the height ($z_{n-1}$, $z_n$) of an aft-tube bearing is assumed to be 0.0 mm.

$\theta_e$: vertical inclination of crankshaft
$\theta_{e'}$: horizontal inclination of crankshaft
$\theta_i$: vertical inclination of intermediate shaft
$\theta_{i'}$: horizontal inclination of intermediate shaft
$H_{int}$: height of intermediate shaft bearing ($z_{n-2}$)
$H_{ea}$: height of aft-end bearing of engine ($z_{n-3}$)
$H_{ea'}$: horizontal displacement of aft-end bearing of engine ($y_{n-3}$)
$H_{ef}$: height of fore-end bearing of engine ($z_1$)
$H_{ef'}$: horizontal displacement of fore-end bearing of engine ($y_1$)
$H_T$: deformation amount of engine due to thermal expansion
$H_{HOC-T}$: hogging amount of engine due to temperature variation (>0)
$H_{SAG}$: maximum amount of initial sag of engine upon installation (<0)
D: maximum amount of sag of engine double bottom
$H_{HOG-D}$: hogging amount of engine associated with draft variation (>0)
$x_j$: bearing position (where j = 1, ..., n)
Moreover, j = 1 represents the position of the fore-end bearing (main bearing) of the engine and j = n represents the position of the aft-tube bearing. Design values are to be used as values thereof.
$Z_j$: bearing height (where j = 1, .., n)

Moreover, $z_{1j}$ denotes an initial bearing height upon engine installation, while $z_{2j}$ denotes a bearing height with consideration for hull deformation and thermal deformation after the ship has entered service.

$L_e$: engine length
$L_v$: length of engine room double bottom

(a) A displacement during engine installation will now be described.

In the following description, the propeller shaft is assumed to be a reference line for the inclination $\theta_e$ and $\theta_i$ (however, the reference line need not be limited to the propeller shaft).

The inclination $\theta_i$ of the intermediate shaft is represented by Formula (16) given below.

[Formula 13]

$$\theta_{int} = \tan^{-1} \frac{H_{uu} - H_{ea}}{L_i} \qquad (16)$$

The inclination $\theta_e$, of the crankshaft is represented by Formula (17) given below.
[Formula 14]

$$\theta_e = \tan^{-1} \frac{H_{ea} - H_{ef}}{L_e} \qquad (17)$$

In this case, the bearing height of the engine portion is represented by Formula (18) given below (provided that the aft-end bearing of the engine is used as a reference).
[Formula 15]

$$z_{1,j} = H_{ea} - \theta_e \cdot \left(x_j - x_{n-3}\right) \text{ where } j = 1, \cdots, n-3 \qquad (18)$$

When a straight line connecting the fore-end bearing and the aft-end bearing of the engine (engine center line) is used as a reference, coordinate conversion at an angle $\theta_1$ becomes necessary as represented by Formula (19) given below.
[Formula 16]

$$z_{1,j}{}^T = -\left(x_n - x_j\right)\sin\theta_1 + \left(z_j - z_{n-3}\right)\cos\theta_1$$

$$\text{where } \theta_1 = \tan^{-1}\left(\frac{z_{1,n-3} - z_{1,1}}{L_e}\right) . \qquad (19)$$

Since the x-axis direction is not subjected to constraints and is therefore free, the x-axis direction is unaffected by the coordinate conversion. At the same time, since the angle of rotation is slight with respect to the longitudinal direction, the influence of the coordinate conversion is negligible. In addition, an initial sag represented by Formula (20) given below is applied to the engine portion after the coordinate conversion.
[Formula 17]

$$z_{1,j}{}^T = -\frac{16}{5}\frac{H_{SAG}}{L_e{}^4}\left(x_j{}^4 - 2L_e \cdot x_j{}^3 + L_e{}^3 \cdot x_j\right) \text{ where } j = 1, \cdots, n-3 \qquad (20)$$

(b) A displacement in a hot state will now be described.
The vertical displacement of a bearing due to thermal expansion of the engine may be derived as below.
When the aforementioned engine center line is used as a reference line, the bearing height at the propulsion shafting is represented by Formula (21) given below.
[Formula 18]

$$z_{1,j}{}^T = -\left(x_n - x_j\right)\cdot\sin\theta_1 + \left(z_j - z_{n-3}\right)\cos\theta_1 - H_T \text{ where } j = n-3, \cdots, n \qquad (21)$$

In addition, thermal expansion causes intermediate to high-level bending at the engine portion, which is represented by Formula (22) given below.
[Formula 19]

$$z_{1,j}{}^{T} = \frac{16}{5} \frac{H_{HOG-T}}{L_e{}^{4}} \left\{ x_j{}^{4} - 2L_e \cdot x_j{}^{3} + L_e{}^{3} \cdot x_j \right\} \quad \text{where} \quad j = 1, \cdots, n-3 \quad (22)$$

(c) A vertical displacement (hull sag) due to variations in draft will be described.

When using a formula by J. Stefenson (1974) [J. Stefenson: Utveckling av Berakningsmetoder och Instllationskriterier for Medelvarvsmotoranlaggningari Fartyg, NSTM74 Stockholm, Sweden(1974)] as a sag formula in which the aft aft-tube bearing and the engine's fore bearing (main bearing) are used as reference positions, a displacement ($z_{2j}$) thereof can be calculated by Formula (23) given below. The formula represents a sag in the axial direction at the center of width which takes both ends of the double bottom portion of the engine room as references.

[Formula 20]

$$z_{2,j} = a \cdot \left(L_v - x_j\right)\left\{ L_v{}^{3} - \left(L_v - x_j\right)^{3} \right\} \quad \text{where} \quad j = 1, \cdots, n \quad (23)$$

Now, when D denotes the maximum value of hull sag with respect to draft, then hull sag is calculated by Formula (24) given below.

[Formula 21]

$$z_{2,j} = \frac{4 \cdot \sqrt[3]{4}}{3} \frac{D}{L_v{}^{4}} \cdot \left(L_v - x_j\right)\left\{ L_v{}^{3} - \left(L_v - x_j\right)^{3} \right\} \quad \text{where} \quad j = 1, \cdots, n \quad (24)$$

It should be noted that the proportional relationship existing between maximum hull sag and draft depth has been verified as the actual result of inverse analysis, and is also theoretically correct as presented in a paper by Sakai et al. (1978) [H. Sakai, Y. Kanda: A Simple Estimation Method of Double Bottom Deformation, Journal of the Faculty of Engineering, The University of Tokyo, Vol. XXXIV, No. 4(1918), pp. 589-600].

In addition, when the fore end and the aft end of the engine are used as reference lines, a hull sag is calculated by Formula (25) given below.

[Formula 22]

$$z_{2,j}{}^{T} = -x_j \cdot \sin \theta_2 + \left(z_j - z_{n-3}\right)\cos \theta_2 \quad (25)$$

where $j = 1, \cdots, n$

and

$$\theta_2 = \tan^{-1}\left( \frac{-z_{2,n-3}}{L_e} \right)$$

Incidentally, while the aforementioned formula by J. Stefenson shows excellent coincidence with respect to variations in the bearing height of propulsion shafting constituted by an intermediate shaft and an aft-tube (corresponding to a propeller shaft), the same formula produces a value that is greater than a realistic value for the sag of the engine portion. This is because the rigidity of the engine is greater than the rigidity of the hull alone, the hull rigidity at the actual engine portion is increased, and as a result, the actual amount of displacement is smaller than a value calculated by the formula of J. Stefenson.

In consideration thereof, for the purpose of conforming the sag of the engine portion to a realistic value, using a sag curve of a beam with a uniformly-distributed load as a sag formula for the engine portion as described above results in Formula (26) given below.

[Formula 23]

$$z_{2,j}{}^{T} = \frac{16}{5} \frac{H_{HOG-D}}{L_e{}^{4}} \left( x_j{}^{4} - 2L_e \cdot x_j{}^{3} + L_e{}^{3} \cdot x_j \right) \quad \text{where} \quad j = 1, \cdots, n-3 \quad (26)$$

(d) A bearing height (shafting alignment) which integrates the matters described above may be represented as follows.

That is, shafting alignment with consideration for an initial installed state of the engine (height, inclination, initial sag) $(z_{1j}^T)$, the thermal expansion of the engine associated with temperature variation, and the hull deformation $(z_{2j}^T)$ of the engine room double bottom associated with draft variation is represented by Formula (27) given below (calculated by Formula (21) and Formula (25)).

[Formula 24]

$$z_j = z_{1,j}^T + z_{2,j}^T \quad \text{where} \quad j = 1, \cdots, n \qquad (27)$$

In particular, the engine portion is represented by Formula (28) given below (calculated by Formula (20), Formula (22), and Formula (26)).

[Formula 25]

$$z_j = \frac{16}{5} \frac{H_{SAG} + H_{HOG\_T} + H_{HOG-D}}{L_e^{\,4}} \left( x_j^{\,4} - 2L_e \cdot x_j^{\,3} + L_e^{\,3} \cdot x_j \right) \qquad (28)$$

In the respective formulas given above, $z_j$ corresponds to $d_{z0}$ in Formula (10). In addition, Formula (27) given above is used for the intermediate shaft bearing and the aft-tube bearing while Formula (28) is used for the engine bearings.

Moreover, since Formula (28) represents a displacement using a line connecting the #1 bearing 5A and the #9 (n-3) bearing 5A (engine center line) as a height reference line, the heights $d_{z0}$ of the #1 bearing 5A and the #9 (n-3) bearing 5A are both zero "0".

Therefore, a bearing height at the intermediate shaft and a bearing height at the engine are calculated based on a sag formula corresponding to an engine condition such as a hot state, a cold state, or the like and a load state of the ship or the like, and the bearing heights are substituted as initial heights into $h_2$ of Formula (10). Then, the transfer matrix method is used to calculate a state quantity, i.e., a displacement and an acting force, at each portion.

Based on the displacement at each portion, a crank deflection and a bearing load are calculated, and an assessment is made on whether or not the crank deflection and the bearing load fall in a preset evaluation range (more precisely, an assessment is made as to which evaluation level the crank deflection and the bearing load fall on).

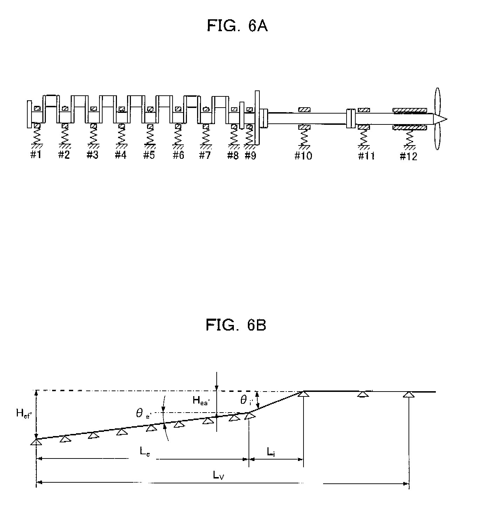

Next, shafting alignment on a horizontal plane (in a horizontal direction) will be described with reference to FIG. 6.

Here, it is assumed that inclination within the horizontal plane uses the aft-tube center line as a reference line (the intermediate shaft is also assumed to be on the reference line), and the inclination of the intermediate shaft 3 with respect to the reference line is denoted by $\theta_{i'}$, and the inclination of the crankshaft by $\theta_{e'}$.

(a) The initial value of the inclination of the intermediate shaft 3 in the horizontal direction (y-direction) is calculated by Formula (29) given below, and the inclination of the crankshaft (engine) is calculated by Formula (30) given below.

[Formula 26]

$$\theta_{i'} = \tan^{-1} \frac{-H_{ea'}}{L_i} \qquad (29)$$

[Formula 27]

$$\theta_{e'} = \tan^{-1} \frac{H_{ea'} - H_{ef'}}{L_e} \qquad (30)$$

In this case, the bearing position within the horizontal plane on the crankshaft may be calculated by Formula (31) given below (the formula uses the aft-end bearing of the engine as a reference).

[Formula 28]

$$y_j = H_{ea'} - \theta_{e'} \cdot (x_j - x_{n\_3}) \quad \text{where} \quad j = 1, \cdots, n-3 \qquad (31)$$

In Formula 28, $y_j$ corresponds to $d_{y0}$ in $h_2$ of Formula (10).

Based on these values, in the same manner as in the vertical direction, a state quantity (displacement and acting force) at each portion in the shafting is calculated using the transfer matrix method, the crank deflection of the engine is calculated based on the displacements, and an assessment is made on whether or not the deflection value falls in a preset evaluation range (more precisely, on which evaluation level the deflection value falls).

An outline of the evaluating method will now be given.

A crank deflection (Def) may be calculated by Formula (14) and Formula (15) described above. A bearing load ($F_z$) may be calculated by Formula (32) given below when $d_{z0}$ denotes the initial height of a targeted bearing (in this case, assumed to be the height of the center position of the shaft that is in contact with the bottommost face of the bearing) or, in other words, an initial bearing height, ($d_z$) denotes a calculated bearing height, and $k_z$ denotes the translational spring constant of the engine main body.

$$F_z = k_z \cdot (d_z - d_{z0}) \quad \cdots (32)$$

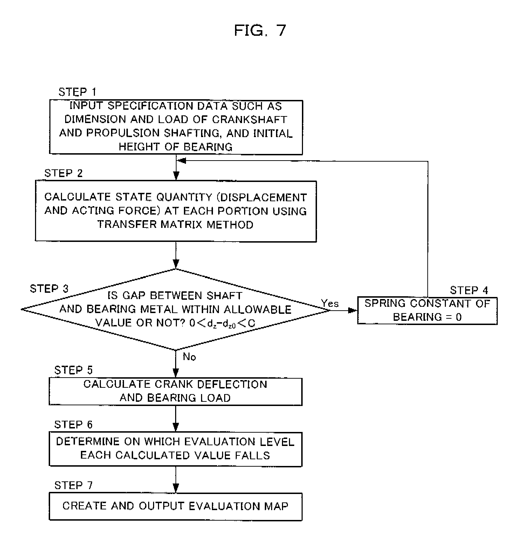

Now, a calculation procedure of the evaluating method described above with a focus on a bearing load will now be described with reference to the flowchart shown in FIG. 7.

First, in step 1, specification data such as dimensions, loads, or the like of the crankshaft and the propulsion shafting, as well as an initial bearing height, are inputted.

Next, in step 2, a state quantity or, in other words, a displacement (bearing height), and an acting force are calculated using the transfer matrix method.

Next, in step 3, a judgment is made on whether a displacement $d_z$ in a height direction calculated in step 2 is oriented downward or not, and when oriented upward, a judgment is made on whether the shaft is in contact with a topmost face within the bearing or not. When the displacement $d_z$ is oriented upward, a judgment is made on whether the difference between the bearing height and the initial bearing height ($d_z - d_{z0}$) falls within the range of an acceptable value c between the crankshaft and a bearing metal. When the difference falls within the range of the acceptable value (the difference (gap) between the inside diameter of the bearing and the outside diameter of the shaft which, since downward is assumed to be positive, takes a negative value) c, the procedure proceeds to step 4 in order to improve calculation accuracy, whereby the spring constant ($k_2$) is set to zero and the procedure returns to step 2 once again to perform calculation.

On the other hand, when the difference between the bearing height calculated in step 2 and the initial bearing height ($d_z - d_{z0}$) either exceeds the acceptable value c between the crankshaft and the bearing metal or takes a negative value, the procedure proceeds to step 5.

In step 5, a crank deflection and a bearing load are calculated based on Formula (14) and Formula (15) using the bearing height at each portion.

Then, in step 6, a judgment is made on which evaluation level the crank deflection and the bearing load fall on. Subsequently, in step 7, an evaluation map is created and outputted.

When calculating a bearing load, the calculation is to be continued with "zero" as the bearing load in the case where the difference between the bearing height and the initial bearing height falls within the range of the acceptable value c between the crankshaft and a bearing metal. However, a case where the difference between the bearing height and the initial bearing height exceeds the acceptable value or, in other words, where the bearing load takes a negative value corresponds to a range in which the uplift of the shaft occurs and therefore falls outside the allowable range.

Meanwhile, the centrifugal force of a rotating body such as a crank throw, the inertia force of a reciprocally moving body such as a cylinder, and a gas explosion force act on a shaft portion (crank journal) in an operational state. When a bearing load is absent in a static state, whirling increases. When whirling acts (obviously, the case of a negative bearing load in a static state also applies), a phenomenon occurs in which the shaft strikes the bearing, and causes spalling of the bearing metal or denting. As a result, burning of the bearing occurs and, in the worst-case scenario, the ship may cease to operate. Therefore, when a negative bearing load occurs at any one of the bearings, an outside-the-range judgment is made.

While bearing displacements occur in both vertical and horizontal directions as described earlier, since the vertical direction is primarily problematic, a vertical displacement is first arranged so as to fall in a predetermined allowable range and, subsequently, a horizontal displacement is evaluated.

Furthermore, a method of creating the aforementioned evaluation map and in particular, an evaluation map regarding the vertical direction will now be described in detail.

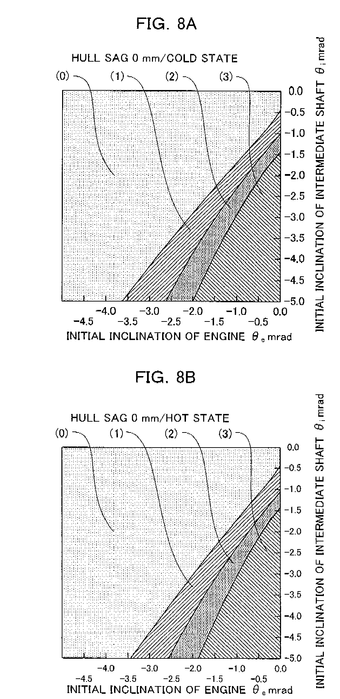

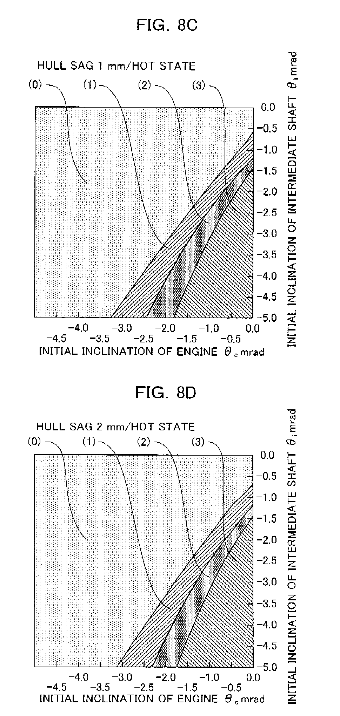

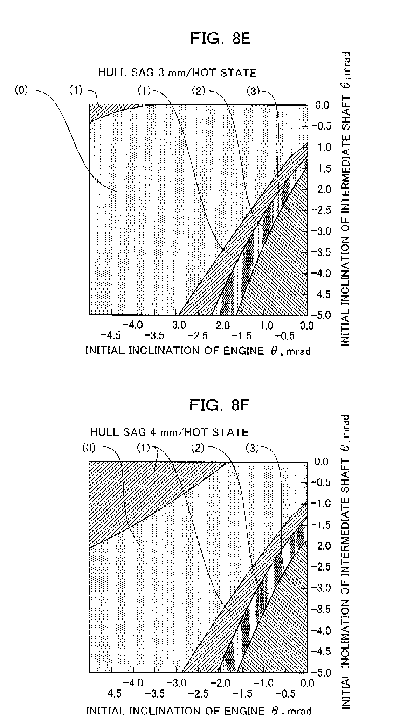

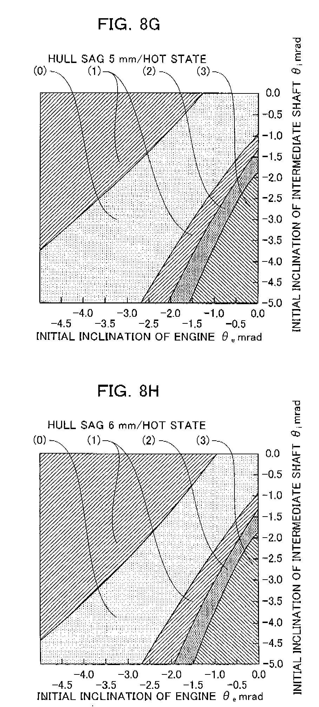

Shown in FIG. 8 is a map representation of evaluation levels of a crank deflection calculated based on the respective formulas described above when a hull sag is varied in 1 mm increments in an engine cold state and an engine hot state for a vertical installation condition (the inclination of the crankshaft and the inclination of the intermediate shaft) of the engine with respect to the evaluation condition, i.e., evaluation range of crank deflection. Moreover, FIG. 8(a) represents a case of 0 mm hull sag in an engine cold state, while FIGS. 8(b) to 8(h) represent cases of 0 mm to 6 mm hull sag (in 1 mm increments) in an engine hot state. Furthermore, in the drawing, portion (0) represents an evaluation level "0" (within allowable range), portion (1) an evaluation level "1" (outside allowable range), portion (2) an evaluation level "2" (outside allowable range), and portion (3) an evaluation level "3" (outside allowable range). These evaluation levels correspond to a case in which there are three numerical values provided by an engine manufacturer or, more specifically, to a case in which, with these numerical values as boundaries, a level equal to or higher than an allowable value is designated level "3", a level equal to or smaller than the allowable value is designated level "2", a level equal to or smaller than the allowable value in which readjustment is desirable is designated level "1", and a desirable level smaller than the readjustment (a normal level) is designated level "0". A user may select any acceptable level from the three described above. However, in the present embodiment, while the evaluation level "0" is handled as an allowable range and the outside of the allowable range is divided into three evaluation levels "1" to "3", this three-way division of levels is used only to grasp a degree of divergence of crank deflection from the allowable range.

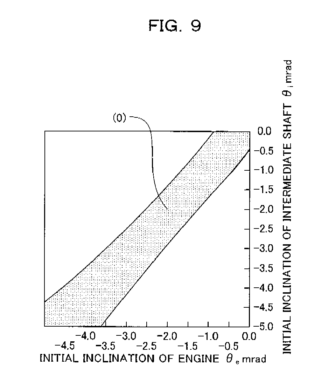

Furthermore, a representation of an allowable range satisfying all of the conditions described above (also referred to as a comprehensive evaluation and which takes AND operations of binarized data while setting the evaluation level "0" of each map to "1" and other levels to "0") results in a "0" portion shown in FIG. 9.

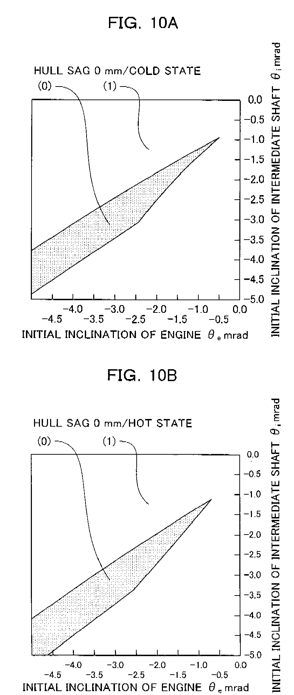

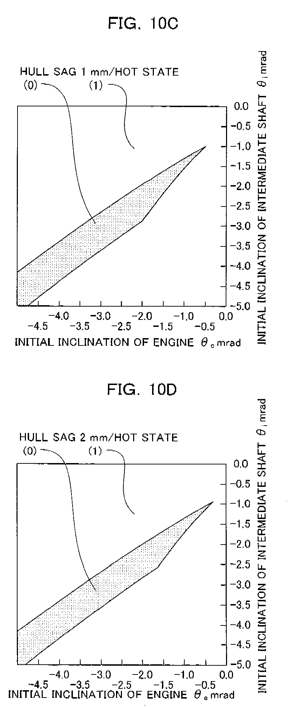

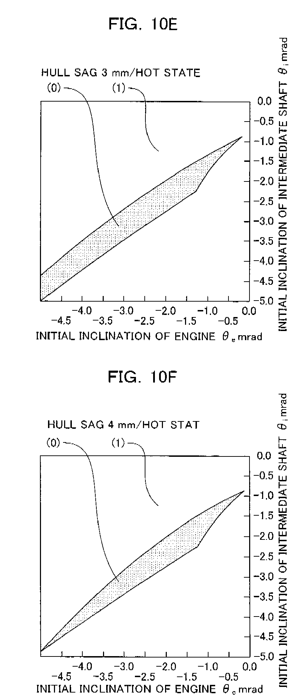

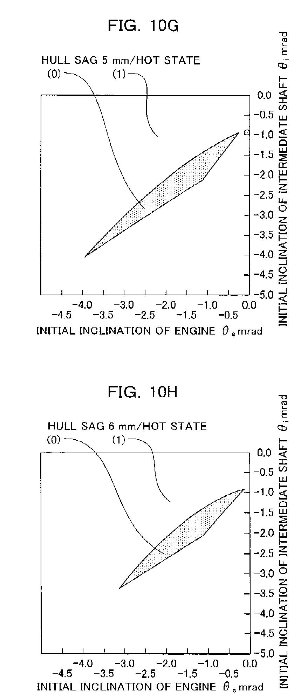

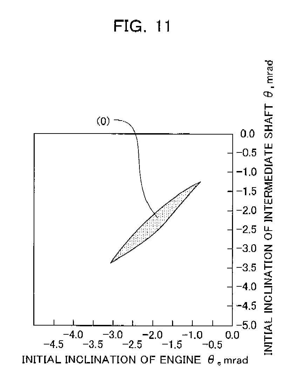

In a similar manner, FIG. 10 is a map representation of evaluation levels of bearing loads calculated based on the respective formulas described above when hull sag is varied in 1 mm increments in an engine cold state and an engine hot state for an installation condition of the engine (the inclination of the crankshaft (engine) and the inclination of the intermediate shaft) in which bearing loads do not take a negative value. Moreover, FIG. 10(a) represents a case of 0 mm hull sag in an engine cold state, while FIGS. 10(b) to 10(h) represent cases of 0 mm to 6 mm hull sag in an engine hot state. Furthermore, in the diagrams, portion (0) represents an evaluation level "0" (within allowable range) and portion (1) an evaluation level "1" (out of allowable range). In addition, a representation of an allowable range satisfying all of the conditions described above (a range of comprehensive evaluation) results in portion (0) shown in FIG. 11.

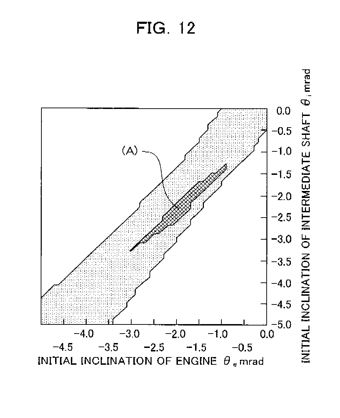

Finally, as vindicated by portion (A) in FIG. 12, an evaluation map representing an installation condition in which both a crank deflection and a bearing load fall in an allowable range assumes a range satisfying both portions (0), i.e., evaluation levels "0" of FIG. 9 and FIG. 11 (a comprehensive evaluation and which takes AND operations of binarized data with respect to the evaluation level "0").

Next, a method of creating an evaluation map regarding the horizontal direction will be described.

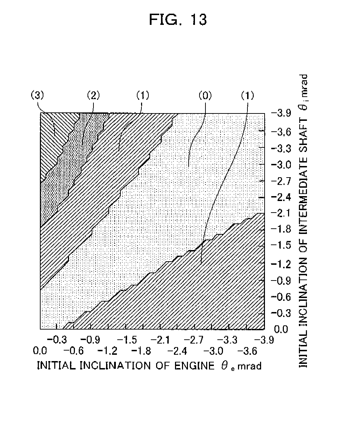

FIG. 13 is a map representation of evaluation values of crank deflection calculated based on the respective formulas described above when hull sag is varied in 1 mm increments in an engine cold state and an engine hot state for a horizontal installation condition (the inclination of the crankshaft (engine) and the inclination of the intermediate shaft) of the engine with respect to an evaluation condition, i.e., evaluation levels of crank deflection. Moreover, in FIG. 13, portion (0) represents an evaluation level "0" (within allowable range), portion (1) an evaluation level "1" (out of allowable range), portion (2) an evaluation level "2" (out of allowable range), and portion (3) an evaluation level "3" (out of allowable range). In this case, evaluation levels are divided into similar stages as described with reference to FIG. 8.

Therefore, as an installation condition (inclination of the respective shafts) with respect to a horizontal crank deflection, installation should be performed so as to fall within the range represented by the portion (0) (evaluation level "0") shown in FIG. 13.

For example, when installing the engine, adjustment of the respective shafts is performed in the horizontal direction so that based on the measurement results of crank deflection, values thereof fall within the range indicated by the portion (0).

When merely changing the inclination of the crankshaft (engine) is insufficient, translating the engine in the horizontal direction and, if necessary, further adjusting the inclination of the crankshaft within a horizontal plane shall suffice.

Furthermore, in the case of an engine already installed, performing adjustment by inserting a bearing metal with a displaced bearing core into an aft bearing inside the engine shall suffice. In this case, an alignment condition consistent with the horizontal crank deflection is calculated in advance as an adjustment amount using an inverse analysis (according to the technique described in Patent Document 1), and based on results thereof, a bearing metal is used which has a core whose inclination equals the average value of the inclination of the crankshaft (engine) and the inclination of the intermediate shaft. In addition, as for a bearing (bearing metal) to be used, a crank deflection in a case of varying the core of an aft bearing inside the engine is calculated using a forward analysis method in order to verify the validity of the bearing before preparing the actual bearing.

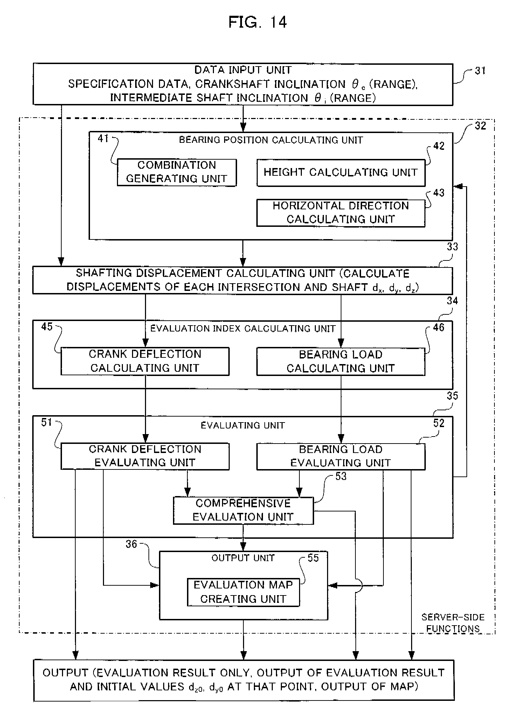

Next, a device for evaluating shafting alignment will be described with reference to FIG. 14.

A shafting alignment evaluating device of this ship primarily includes: a data input unit 31; a bearing position calculating unit 32; a shafting displacement calculating unit 33; an evaluation index calculating unit 34; an evaluating unit 35; and an output unit 36. It should be noted that various calculations by the evaluating device are to be executed by a program. Accordingly, a computer system is used. For example, a terminal (computer terminal) is used as the data input unit 31 while the bearing position calculating unit 32, the shafting displacement calculating unit 33, the evaluation index calculating unit 34, and the evaluating unit 35 are provided on the side of a server (processing device (a computer is used)) connected to the terminal. In addition, a part of the output unit 36 is provided on the terminal side (obviously, the configuration may consist of a single computer).

Specifically, a computer terminal made up of, for example, a display screen, an arithmetic processing unit, a keyboard, and the like is used as the data input unit 31. The computer terminal is arranged so as to enable input, via the keyboard or the like, of specification data of the drive shafting, evaluation conditions (for example, a normal allowable value (minimum required), a value that preferably should be readjusted, and a maximum boundary value for a crank deflection, and a maximum allowable value and a minimum allowable value for a bearing load), the inclination of the engine or, i.e., an inclination $\theta_e$ of the crankshaft 2 (specifically, the inclination of a line connecting the fore-end bearing and the aft-end bearing of the engine), and an inclination $\theta_i$ of the intermediate shaft 3 disposed between the aft-tube bearing 5A and the intermediate bearing 5B of the engine. In addition, the inclination $\theta_e$ of the crankshaft 2 and the inclination $\theta_i$ of the intermediate shaft 3 are arranged so as to be respectively inputted as single numerical values or as numerical ranges. Other data to be selected include the make of the engine. Furthermore, an evaluation condition can also be inputted through selection. An appropriate calculation model becomes usable by selecting a make.

The aforementioned specification data include the specification data of the engine and the specification data of the intermediate shaft and the aft-tube. For example, such specification data may include dimensions of various members, distances between members, various coefficients, various moments which act on the respective shaft portions, as well as heights of bearings provided on shaft ends, amounts of deformation due to thermal expansion of the engine, and a sag of the double bottom portion of the engine room. In addition, the specification data of the engine may alternatively be arranged so as to be selected, after data from the engine manufacturer is received, from data registered beforehand in a storage unit regarding one or more engines. Obviously, specification data not registered can be inputted.

In this case, while the data input unit 31 is provided with input fields for all data, input fields for data already registered are arranged so as not to be displayed.

For example, a single numerical value is inputted as inclination data in a case where an evaluation of a combination $(\theta_e, \theta_i)$ of the inclination of a pair of a crankshaft and an intermediate shaft is desired, or more specifically, when evaluating the current status of a ship in service. In addition, when an evaluation is given for a newly-built ship or for a ship in service to the effect that the current alignment is problematic, a numerical range is inputted in the case of newly-built ship in order to obtain information on a combination of appropriate inclination $(\theta_e, \theta_i)$ which ensures that the engine itself is appropriately installed, and in the case of a ship in service, since the engine cannot be moved, a numerical range is inputted using the appropriate combination as a reference for the purpose of determining how far the opening position of a ring-like bearing metal, to be used fitted between a bearing and a shaft supported by the bearing, should be displaced from the center. Moreover, instead of having a user input a numerical range, inputting via the data input unit 31 can be skipped by having the storage unit store in advance a normal range so that the normal range is usable by the bearing position calculating unit 32. In the present first embodiment, a description will be given for a method in which input is performed by a user.

The bearing position calculating unit 32 calculates a bearing position (initial bearing height, horizontal position) necessary for calculations by the shafting displacement calculating unit 33, and includes: a combination generating unit 41 for generating combination data when inclination $(\theta_e, \theta_i)$ is inputted in the form of a numerical range; a height calculating unit 42 for calculating a bearing height with respect to a height reference line; and a horizontal position calculating unit 43 for calculating a bearing horizontal position with respect to a horizontal-direction reference line.

Accordingly, the height calculating unit 42 calculates an initial bearing height in the vertical direction based on Formula (27) or Formula (28) provided above, while the horizontal position calculating unit 43 calculates an initial bearing horizontal position based on Formula (31) provided above.

As for inclination to be used by both calculating units 42 and 43, when a single combination $(\theta_e, \theta_i)$ is inputted at the data input unit 31, such a combination is used, and when a numerical range is inputted, all combinations are generated at a predetermined angular increment within the range by the combination generating unit 41 and the respective generated combinations are to be used by both calculating units 42 and 43.

The initial bearing position calculated here is to be used in the calculation using the transfer matrix method. That is, in the vertical direction, the relationship between height and inclination with respect to an aft-tube center line can been seen from Formula (16) and Formula (17). In the horizontal direction, the relationship between height and inclination in the horizontal direction with respect to the aft-tube center line can been seen from Formula (29) and Formula (30).

With the evaluating method according to the present invention, for example, in the case of a newly-built ship, it is important to ascertain whether or not the alignment thereof will be free of problems even after the ship enters service. Therefore, even for a single inclination combination, with the engine in a hot state, an evaluation is to be performed at a predetermined increment (e.g., 1 mm) from a hull sag of 0 (= 0 mm) to a sag at full cargo at which hull sag becomes maximum (maximum sag: e.g., 6 mm). In other words, a total of seven bearing positions are to be generated by a single inclination combination. That is, initial bearing positions are to be calculated for the number of variations obtained as the total number of combinations x "7" variations (data combining one inclination and one hull sag shall be referred to as a pattern).

Evaluations may be performed (evaluation levels may be calculated) on all patterns by calculating initial bearing positions for all patterns, handing over the initial bearing positions to the evaluation index calculating unit 34 to respectively calculate evaluation indexes, and then handing over all the evaluation indexes to the evaluating unit 35. Alternatively, evaluations may be performed by generating one pattern at a time by the bearing position calculating unit 32 and performing an evaluation on the pattern according to the procedure described above and, subsequently, returning to the bearing position calculating unit 32 once again to generate and evaluate the next pattern. Moreover, since processing procedures are not limited to those just described and many variations exist, any processing procedure may be adopted. However, in the present first embodiment, it is assumed that processing is performed according to the procedure in which patterns are generated one by one.

The shafting displacement calculating unit 33 calculates displacements at predetermined positions on the crankshaft 2 and the intermediate shaft 3 using initial bearing positions provided by the bearing position calculating unit 32. In this case, the predetermined positions are referred to as a part (portion) corresponding to each intersection of the crank arm and the journal and the position of each bearing (center position) necessary for calculating a crank deflection, and on the part and position, a displacement is to be calculated.

The evaluation index calculating unit 34 calculates an evaluation index using the displacement of a predetermined position calculated by the shafting displacement calculating unit 33. While evaluation indexes include a crank deflection and a bearing load, either one or both of them may be used. While an operator specifies which of the evaluation indexes is to be used, since it is desirable to evaluate both indexes, the present first embodiment will be described on the premise that both indexes are to be evaluated.

That is, the evaluation index calculating unit 34 is provided with a crank deflection calculating unit 45 that calculates a crank deflection based on displacements (amounts of displacement) of parts corresponding to the aforementioned intersections and a bearing load calculating unit 46 that calculates a load on each bearing.

A crank deflection is calculated by the crank deflection calculating unit 45 using fore and aft displacements of the same crank throw among the intersections. In addition, a bearing load is calculated by the bearing load calculating unit 46 using a vertical displacement among the displacements of an initial bearing position.

The evaluating unit 35 compares an evaluation condition, i.e., an evaluation level stored in advance in the storage unit and, for example, recommended by the engine manufacturer with an evaluation index obtained through calculation, and determines which evaluation level the inclination combinations $(\theta_e, \theta_i)$, $(\theta_{e'}, \theta_{i'})$ belong to. For example, the maximum allowable value and the minimum allowable value of bearing loads at the engine, and limit values (the maximum limit value, a value desirably readjusted, a normal limit value) of a crank deflection in a cold state of the engine are shown. For a crank deflection, the same value is to be used in the vertical and horizontal directions.

As described earlier, bearing loads are classified into an evaluation level "0" between the minimum allowable value and the maximum allowable value, and a binarized evaluation level "1" of other levels requiring readjustment. In addition, four levels are set for crank deflections, namely, "0" for normal allowable values. "1" for values that are preferably readjusted, "2" for values over the values that are preferably readjusted and up to the maximum limit value, and "3" for values exceeding the maximum limit value.

Furthermore, an evaluation is performed on inclination combinations $(\theta_e, \theta_i)$, $(\theta_{e'}, \theta_{i'})$ under each condition of a cold state or hot state of the engine and a sag range (upon engine installation, during ballasting, at full cargo), a logical AND operation of all evaluations of the same inclination combination is performed, and inclination combinations $(\theta_e, \theta_i)$, $(\theta_{e'}, \theta_{i'})$ indicating the best evaluation level among all conditions are calculated.

More specifically, a crank deflection evaluating unit 51 performs the level placement described above when a crank deflection is inputted, and a bearing load evaluating unit 52 performs the level placement when a bearing load is inputted. When evaluations on all patterns have not been complete, processing is once again returned to the bearing position calculating unit 32. Once evaluations on all patterns are completed, a comprehensive evaluation on the evaluation indexes is performed by a comprehensive evaluation unit 53. The comprehensive evaluation unit 53 carries out a comprehensive evaluation by performing a logical AND operation and binarization on each sag (in the present embodiment, seven patterns) of each inclination combination $(\theta_e, \theta_i)$, $(\theta_{e'}, \theta_{i'})$ of all evaluation results respectively obtained by the crank deflection evaluating unit 51 and the bearing load evaluating unit 52. Furthermore, when comprehensively evaluating the two evaluation indexes, in addition to the individual comprehensive evaluations described above, a logical AND operation is performed on all patterns (in the example given above, fourteen patterns) of crank deflections and bearing loads regarding the same inclination combinations $(\theta_e, \theta_i)$, $(\theta_{e'}, \theta_{i'})$, and a further comprehensive evaluation (hereinafter also referred to as a consolidated evaluation) is performed on the two evaluation indexes.

In addition, the output unit 36 generates a signal for screen output of an evaluation result and generates data to be printed out by a printer. The output unit 36 is also provided with an evaluation map creating unit 55. When an evaluation is performed in the form of a numerical range on the inclination combinations $(\theta_e, \theta_i)$, $(\theta_{e'}, \theta_{i'})$, the evaluation is outputted in the form of an evaluation map from the evaluation map creating unit 55.

The evaluation map creating unit 55 reflects and graphically represents an evaluation result received from the evaluating unit 35 onto a two-dimensional plane having the two angles of inclination ($\theta_e$ and $\theta_i$), ($\theta_{e'}$ and $\theta_{i'}$) as two axes thereof. Output can be carried out per each pattern described above. Moreover, a consolidated evaluation and a comprehensive evaluation can also be outputted. When only one inclination combination $(\theta_e, \theta_i)$, $(\theta_{e'}, \theta_{i'})$ is given, either only the evaluation result thereof, or both the evaluation result and the initial position of the bearing at that point $(d_{z0}, d_{y0})$ can be outputted.

The evaluating method used by the evaluating device described above will now be explained in accordance with respective use conditions.

A. when inputting inclination combinations $(\theta_e, \theta_i)$, $(\theta_{e'}, \theta_{i'})$ in the form of numerical ranges and calculating with respect to the vertical and horizontal directions:

(1) Input specification data, and the respective minimum values and maximum values of an inclination combination $(\theta_e, \theta_i)$ in the vertical direction and an inclination combination $(\theta_{e'}, \theta_{i'})$ in the horizontal direction via the data input unit 31.
(2) At the bearing position calculating unit 32, read specification data necessary for calculations by the height calculating unit 42 and the horizontal position calculating unit 43, and at the combination generating unit 41, read the numerical ranges of the inclination combination $(\theta_e, \theta_i)$ in the vertical direction and the inclination combination $(\theta_{e'}, \theta_{i'})$ in the horizontal direction.
(3) At the combination generating unit 41, combination data for which the inclination combination $(\theta_e, \theta_i)$ in the vertical direction takes the minimum value and the minimum value of hull sag are generated and handed over to the height calculating unit 42, and combination data for which the inclination combination $(\theta_{e'}, \theta_{i'})$ in the horizontal direction takes the minimum value is also generated and handed over to the horizontal position calculating unit 43.

Subsequently, at hull sags based on a predetermined increment, combination data of the same inclination as the previous hull sag is to be handed over to the respective calculating units 42 and 43. Once hull sags are completed up to the maximum value thereof, next, each inclination combination $(\theta_e, \theta_i)$, $(\theta_{e'}, \theta_{i'})$ is varied at a predetermined increment and in the same manner as described above, handed over to the respective calculating units 42 and 43 for all hull sags.
(4) The height calculating unit 42 and the horizontal position calculating unit 43 receive inclination combination data generated by the combination generating unit 41 and calculate an initial position $(d_{z0}, d_{y0})$ of each bearing.
(5) The initial position $(d_{z0}, d_{y0})$ of each bearing is handed over to the shafting displacement calculating unit 33, a calculation using the transfer matrix method is performed, and a portion corresponding to each intersection of the crank arm and the journal and a displacement $(d_x, d_y, d_z)$ of each bearing are calculated.
(6) At the evaluation index calculating unit 34, vertical and horizontal crank deflections are calculated using the displacement of a portion corresponding to each intersection of the crank arm and the journal calculated by the crank deflection calculating unit 45. Meanwhile, at the bearing load calculating unit 46, a vertical bearing load is determined using the calculated displacement of each bearing.
(7) At the evaluating unit 35, the crank deflection from the evaluation index calculating unit 34 is compared with an evaluation condition, and a level placement result and a pattern at that point are associated with each other and stored in a storage unit (not shown). A comparison with an evaluation condition is also performed for a bearing load, and a level placement result and a pattern at that point are associated with each other and similarly stored.

Subsequently, processing returns to (3) and a similar procedure is repeated for all patterns.

Once the evaluation and storage of the last pattern are completed, the comprehensive evaluation unit 53 first performs comprehensive evaluations (logical AND operations) respectively on a crank deflection and a bearing load for each evaluation index based on the evaluation results of the respective inclination combinations $(\theta_e, \theta_i)$, $(\theta_{e'}, \theta_{i'})$, and then performs a comprehensive evaluation of both evaluation indexes or, in other words, a consolidated evaluation (specifically, a logical AND operation is performed on the comprehensive evaluations of the crank deflection and the bearing load for each inclination combination $(\theta_e, \theta_i)$, $(\theta_{e'}, \theta_{i'})$). The results of these consolidated evaluations are also stored in the storage unit and the completion of evaluations is notified to the output unit 36.
(8) Upon completion of evaluations at the evaluating unit 35, the output unit 36 retrieves prescribed evaluation results from the storage unit and creates an evaluation map at the evaluation map creating unit 55. Then, as required, the evaluation map is outputted to a display unit such as a screen or to a printing unit such as a printer. For example, output from the printer takes the form of an evaluation map that uses the inclination $(\theta_e, \theta_i)$ as two-dimensional coordinate axes. Moreover, ultimately, an evaluation map which takes the inclination $\theta_e$ of the crankshaft and the inclination $\theta_i$ of the intermediate shaft in the vertical direction as coordinate axes and which represents the allowable ranges of crank deflection and bearing load, and an evaluation map which takes the inclination $\theta_{e'}$ of the crankshaft and the inclination $\theta_{i'}$ of the intermediate shaft in the horizontal direction as coordinate axes and which represents the allowable ranges of crank deflection and bearing load are outputted.

(9) From the evaluation maps, an operator can discover the allowable ranges of crankshaft inclination $\theta_e$, $\theta_{e'}$ and intermediate shaft inclination $\theta_i$, $\theta_{i'}$ in the vertical and horizontal directions. For example, in the case of a newly-built ship, adjusting the installation of an engine while referencing these allowable ranges enables adjustment with consideration for alignment after the ship enters service. In the case of a ship already in service, since an installed engine cannot be repositioned, alignment adjustment can be performed while referencing the evaluation maps by replacing with a bearing metal having a hole opened such that a shaft can be inserted at a position displaced from the center of the bearing which is the initial position of the bearing.

B. When inputting an inclination combination ($\theta_e$, $\theta_i$) in the form of a numerical range and calculating the vertical and horizontal directions in sequence:

This is a case where a greater emphasis has been placed on efficiency as compared to A. By first calculating an allowable range for inclination in the vertical direction which is subjected to many constraints and then using the allowable range to calculate with respect to the horizontal direction, the calculation of a combination of inclination out of the allowable range in the vertical direction and horizontal inclination can be omitted.

Steps (1) and (2) are the same as in A.

(3) At the combination generating unit 41, combination data for which the inclination combination ($\theta_e$, $\theta_i$) in the vertical direction takes a minimum value and the minimum value of hull sag are generated and handed over to the height calculating unit 42.

Subsequently, at hull sags at a predetermined increment, combination data for the same inclination as the previous hull sag is to be handed over to the respective calculating units 42 and 43. Once hull sags are completed up to the maximum value thereof, an inclination combination ($\theta_e$, $\theta_i$) in the vertical direction is varied at a predetermined increment, and in the same manner as described above, handed over to the respective calculating units 42 and 43 for all hull sags.

(4) The bearing height calculating unit 42 receives a pattern generated by the combination generating unit 41 and calculates an initial position ($d_{z0}$) of the bearing.

(5) The initial position ($d_{z0}$, $d_{y0}$) (where $d_{y0}$ is assumed to be 0) of the bearing is handed over to the shafting displacement calculating unit 33, a calculation using the transfer matrix method is performed, and a portion corresponding to each intersection of the crank arm and the journal and a displacement ($d_x$, $d_y$, $d_z$) of each bearing are calculated.

(6) At the crank deflection calculating unit 45 of the evaluation index calculating unit 34, a vertical crank deflection is calculated using the displacement of a portion corresponding to each intersection of the crank arm and the journal calculated by the shafting displacement calculating unit 33. Meanwhile, at the bearing load calculating unit 46, a vertical bearing load is determined using the displacement of each bearing.

(7) At the evaluating unit 35, the crank deflection calculated by the evaluation index calculating unit 34 is compared with an evaluation condition, and a level placement result and a pattern at that point are associated with each other and stored in a storage unit not shown. A comparison with an evaluation condition is also performed for the bearing load, and a level placement result and a pattern at that point are associated with each other and similarly stored.

Subsequently, processing returns to (3) and a similar procedure is repeated for all patterns.

Once the evaluation and storage of the last pattern are completed, the comprehensive evaluation unit 53 respectively performs comprehensive evaluations (logical AND operations) on the crank deflection and the bearing load for each evaluation index based on evaluation results of each inclination combination ($\theta_e$, $\theta_i$) in the vertical direction, and then performs a comprehensive evaluation of both evaluation indexes or, in other words, a consolidated evaluation. The results of these consolidated evaluations are also stored in the storage unit. Subsequently, the processing proceeds to (3') described below.

(3') At the combination generating unit 41, combination data for which the inclination combination ($\theta_{e'}$, $\theta_{i'}$) in the horizontal direction takes a minimum value is generated and handed over to the horizontal position calculating unit 43.

Subsequently, the inclination combination ($\theta_{e'}$, $\theta_{i'}$) in the horizontal direction is varied in predetermined increments.

(4') The height calculating unit 42 retrieves an inclination combination ($\theta_e$, $\theta_i$) in the vertical direction whose comprehensive evaluation stored in the storage unit is within allowable range, and calculates an initial position $d_{z0}$ of the bearing. However, this processing is performed only initially. In addition, the horizontal position calculating unit 43 receive a horizontal inclination combination ($\theta_{e'}$, $\theta_{i'}$) generated by the combination generating unit 41 and calculates an initial position $d_{y0}$ of the bearing.

(5') is the same as (5) in A.

(6') At the crank deflection calculating unit 45 of the evaluation index calculating unit 34, a horizontal crank deflection is calculated using the displacement of a portion corresponding to each intersection of the crank arm and the journal calculated in (5').

(7') At the evaluating unit 35, the crank deflection from the evaluation index calculating unit 34 is compared with an evaluation condition, a level placement result and the inclination combination $(\theta_{e'}, \theta_{i'})$ in the horizontal direction are associated with each other and stored in the storage unit, and processing subsequently returns to (3').

Once the evaluation and storage of the last inclination combination $(\theta_{e'}, \theta_{i'})$ in the horizontal direction are completed, the completion of evaluations is notified to the output unit 36.

(8') is the same as (8) in A.

similarly, (9') is the same as (9) in A.

C. When inputting a single inclination combination $(\theta_e, \theta_i)$, $(\theta_{e'}, \theta_{i'})$ in the form of numerical values and concurrently calculating the vertical and horizontal directions:

Since this is merely a case where, in the case of A, inclination combinations $(\theta_e, \theta_i)$, $(\theta_{e'}, \theta_{i'})$ in both directions are fixed and the number of existing patterns equals the number of hull sags, a description thereof will be omitted. In this case, since only evaluated values are outputted, an evaluated map is not outputted.

With the evaluating device and evaluating method described above, since the inclination of a crankshaft and the inclination of an intermediate shaft are used as variables and an evaluation map is created which shows the allowable ranges of crank deflection and bearing load in an engine, even if not proficient at performing shafting alignment, the evaluation of shafting alignment can be readily performed by merely measuring the current inclination of the crankshaft (engine) and the current inclination of the intermediate shaft.

In addition, even in the case of installing an engine in a ship, since a combination of the inclination of the crankshaft (engine) and the inclination of the intermediate shaft which falls within an allowable range can be readily found from the evaluation map, appropriate instructions can be issued even if inexperienced in the designing of shafting alignment.

Furthermore, even in the case of a ship in service, the state of the shafting alignment of the ship can be readily evaluated by measuring the inclination of the crankshaft (engine) and the inclination of the intermediate shaft.

Second Embodiment

A device for evaluating the shafting alignment of a ship according to a second embodiment of the present invention will now be described.

while an evaluating device is configured by a single computer system in the first embodiment described above, in the present second embodiment, a client/server system is used in which a portion of functions of a data input unit and an output unit is provided at a client that is a terminal and other portions thereof are provided at a server device connected to the client via a network.

A case of a client/server system will now be described.

Generally, with a service in which a user-side personal Computer (PC) is used as a client (terminal) and a server device is connected to the client via a network such as the Internet, a method is widely used in which information transmitted over the Internet (World Wide Web) is inputted using a client-side browsing software (browser) and transmitted to the server device, and output from the server device is displayed at the client side. Since the present second embodiment is described in a mode in which the system is used by a client via generally available software, a description, of the client shall be omitted. Moreover, the client is at least provided with a part of functions of a data input unit 31 and an output unit 36 (e.g., a screen display function, a printing function and the like).

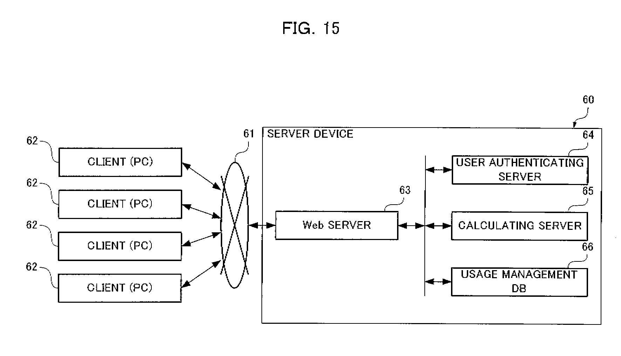

That is, as shown in FIG. 15, a server device 60 is provided with: a Web server (also referred to as an application unit) 63 to become an interface which is directly connected to the Internet 61 and exchanges data between a plurality of clients 62 and the server device 60; a user authenticating server (user authenticating unit) 64 for judging whether a client is a subscriber or not; a calculating server (calculating unit) 65 which performs calculations using data inputted from the client 62; and a usage management database 66 for storing a service used by a user. While the respective servers will be described as being disposed distributed across a plurality of computers connected via an intranet, it is obvious that the servers may also be disposed at a single server in which respective processing units are integrated.

Since the application unit is disposed at the Web server 63, the Web server 63 plays a leading role in generating data for display forms and input forms to be displayed on the browser of the client 62. Upon accepting data input from the client 62, the Web server 63 hands over the data to the user authenticating server 64. Having received the information, the user authenticating server 64 conveys the authentication results to the Web server 63. In addiction, upon accepting data input for evaluation from the client 62, processing is performed in which the Web server 63 hands over the data to the calculating server 65 and the calculating server 65 returns calculation results to the Web server 63.

Furthermore, the Web server 63 is also capable of outputting information regarding the usage fee of the user to the client 62.

As described above, while the client 62 takes on a portion of the data input unit 31 and the output unit 36, the calculating server 65 is provided with all other components described in the first embodiment (a bearing position calculating unit, a shafting displacement calculating unit, an evaluation index calculating unit, an evaluating unit, the remainder of the output unit), and processing procedures are the same as in the first embodiment. Thus, a description of the calculation processing by the calculating server 65 shall be omitted.

Hereinafter, processing in the client/server mode will be described. However, a description of the processing by the calculating server 65 that is exactly the same as in the first embodiment will be omitted.

(1) to (8) listed below represent the operations of respective parts as a procedure from commencement with access by the client to end with logout by the client.

(1) When accessed by the client 62, the Web server 63 transmits initial menu screen data prepared beforehand by the application unit to the client 62.

(2) At the client 62, a login menu is selected from the initial menu screen displayed by the browsing software.

(3) upon receiving a notification of the login menu selection from the client 62, the application unit transmits to the client 62 login form data for inputting login information such as an ID, a password and the like which are subscriber information.

(4) Login information is inputted at the client 62 where the login form is displayed.

(5) Upon receiving the login information, the application unit hands over the login information to the user authenticating server 64. The user authenticating server 64 judges whether the user is a subscriber or not by searching the usage management database 66 having stored the received login information in advance.

(6) Upon receiving the authentication result from the user authenticating server 64, the application unit transmits to the client 62 message data to the effect that service is unavailable in the case of a non-subscriber and user menu data in the case of a subscriber. The following four menus are prepared as user menus.

Menu 1: Creation of alignment evaluation map

Menu 2: Alignment evaluation (bearing load)

Menu 3: Alignment evaluation (crank deflection)

Menu 4: Alignment evaluation (bearing load and crank deflection)

(7) The menu selected by the user is executed by the client 62 (details will be described later).

(8) A usage menu and a logout menu are separately provided on the user menu screen. When the usage menu is selected, the usage management database unit 66 is searched using authenticated user information, and based on the received usage data, display form data of billing information in accordance with the usage menu is transmitted to the client 62. Meanwhile, if the logout menu is selected, display form data of billing information generated during the current login is transmitted to the client 62 and usage by the user is terminated.

An outline of a flow of processing is as described above.

Next, each of the aforementioned user menus will be described.

Menu 1: Creation of alignment evaluation map (M1-1) When the present menu is selected by the client 62, the application unit inquires of the calculating server 65 to verify a registered engine and already registered data, and transmits screen form data that enables selection of the make of the engine to the client 62. (Ml-2) When the client 62 selects an unregistered engine, the Web server 63 transmits to the client 62 input form data displaying all input fields for necessary specification data, adjustable ranges of intermediate shaft inclination $\theta_i$, $\theta_{i'}$, and adjustable ranges of crankshaft inclination $\theta_e$, $\theta_{e'}$.

Input form data is also transmitted to the client 62 when the registered engine is selected. However, in this case, an inquiry is made to the calculating server 65 and an input form that eliminates the need for input fields regarding pre-registered data is created.

In either case, while an input form is created for a case where at least the respective range data (lower limit, upper limit) of intermediate shaft inclination $\theta_i$, $\theta_i$, and crankshaft inclination $\theta_e$, $\theta_e$, take common-sense numerical values, the input form is arranged to be alterable as required.

(Ml-3) Upon receiving data input from the client 62, the application unit hands over the data to the calculating server 65. At the calculating server 65, the data is inputted to the data input unit 31 which outputs the map data of the respective comprehensive evaluations of a bearing load and a crank deflection as well as the consolidated evaluation of both comprehensive evaluation values.

(M1-4) Upon receiving the map data, the application unit transmits evaluation map display form data to the client 62 and, at the same time, registers authenticated user information, time and date information, and usage-performance of the present menu to the usage management database 66.

Menu 2: Alignment evaluation (bearing load)

(M2-1) Omitted since same as Ml-1.

(M2-2) Omitted since same as M1-2. However, input fields, for which ranges cannot be specified, are provided for the inclination $(\theta_e, \theta_i)$, $(\theta_{e'}, \theta_{i'})$.

(M2-3) Omitted since same as Ml-3. However, only bearing load calculation is performed by the evaluation index calculating unit 34, only bearing load evaluation is performed by the evaluating unit 35, and output data includes only inputted inclination $(\theta_e, \theta_i)$, $(\theta_{e'}, \theta_{i'})$ and a result of good/bad judgment.

(M2-4) Upon receiving the output data, the application unit transmits to the client 62 display form data for displaying inclination $(\theta_e, \theta_i)$, $(\theta_{e'}, \theta_{i'})$ and the result of good/bad judgment and, at the same time, registers authenticated user information, time and date information, and usage-performance of the present menu to the usage management database 66.

Menu 3: Alignment evaluation (crank deflection) (M3-1) Omitted since same as M2-1.

(M3-2) Omitted since same as M2-2.

(M3-3) Omitted since same as M1-3. However, only crank deflection calculation is performed by the evaluation index calculating unit 34, only crank deflection evaluation is performed by the evaluating unit 35, and output includes only inputted inclination $(\theta_e, \theta_i)$, $\theta_{e'}, \theta_{i'}$) and a result of good/bad judgment.

(M3-4) Omitted since same as M2-4.

Menu 4: Alignment evaluation (consolidation of bearing load and crank deflection) (M4-1) Omitted since same as M2-1.

(M4-2) Omitted since same as M2-2.

(M4-3) Omitted since same as M1-3. However, only inputted inclination $(\theta_e, \theta_i)$ and a result of good/bad judgment are outputted.

(M4-4) Omitted since same as M1-4. However, only inputted inclination $(\theta_e, \theta_i)$ and a result of good/bad judgment are outputted.

Also with this client/server system, the same effects as the first embodiment can be achieved, and at the same time, an operator can readily evaluate shafting alignment by merely inputting predetermined data via a terminal.

Incidentally, while shafting alignment is evaluated based on a crank deflection and a bearing load in the aforementioned embodiments, an evaluation may alternatively be performed based only on a crank deflection or only on a bearing load.

Primary configurations of an evaluating method and an evaluating device for performing evaluations based solely on a crank deflection or a bearing load will now be described.

That is, an evaluating method taking only a crank deflection into consideration is a method of evaluating the alignment of the drive shafting of a ship including a crankshaft of an engine, an intermediate shaft, and a propeller shaft, the method including: calculating a displacement at a predetermined portion of the drive shafting using a transfer matrix method, based on the inclination of the crankshaft and the inclination of the intermediate shaft; calculating the crank deflection of the crankshaft based on the displacement; and evaluating the alignment of the drive shafting by comparing the calculated crank deflection with a preset evaluation condition,

an evaluating device thereof includes: a data input unit for inputting specification data of drive shafting and data regarding an evaluation condition and the inclination of a crankshaft of an engine and the inclination of an intermediate shaft; a bearing position calculating unit for calculating respective bearing positions in the drive shafting using the specification data; a shafting displacement calculating unit for calculating a displacement at a predetermined portion of the drive shafting using a transfer matrix method, based on the bearing positions calculated by the bearing position calculating unit and based on the specification data; an evaluation index calculating unit for calculating an evaluation index using the displacement calculated by the shafting displacement calculating unit; an evaluating unit for performing an evaluation by comparing the evaluation index calculated by the evaluation index calculating unit and the evaluation condition; and an output unit for outputting an evaluation result obtained by the evaluating unit, wherein the bearing position calculating unit includes at least a bearing height calculating unit for calculating a bearing height with respect to a height reference position;

the shafting displacement calculating unit calculates the displacement of a portion corresponding to the intersection of a crank arm and a journal on the crankshaft; the evaluation index calculating unit includes a crank deflection calculating unit for calculating a crank deflection based on the displacement of the portion corresponding to the intersection; the evaluating unit includes a crank deflection evaluating unit for performing an evaluation by comparing the crank deflection calculated as an evaluation index by the evaluation index calculating unit with the evaluation condition, and

the bearing position calculating unit further includes a bearing horizontal position calculating unit for calculating the horizontal position of a bearing with respect to a horizontal reference position.

In addition, an evaluating method taking only a bearing load into consideration is a method of evaluating the alignment of the drive shafting of a ship including a crankshaft of an engine, an intermediate shaft, and a propeller shaft, the method including: calculating a displacement at a predetermined portion of the drive shafting using a transfer matrix method, based on the inclination of the crankshaft and the inclination of the intermediate shaft; calculating a bearing load acting on each bearing based on the displacement; and evaluating the alignment of the drive shafting by comparing the calculated bearing load with a preset evaluation condition,
an evaluating device thereof includes: a data input unit for inputting specification data of drive shafting and data regarding an evaluation condition and the inclination of a crankshaft of an engine and the inclination of an intermediate shaft; a bearing position calculating unit for calculating respective bearing positions in the drive shafting using the specification data; a shafting displacement calculating unit for calculating a displacement at a predetermined portion of the crankshaft using the bearing positions calculated by the bearing position calculating unit and data regarding the crankshaft among the specification data; an evaluation index calculating unit for calculating an evaluation index using the displacement calculated by the shafting displacement calculating unit; an evaluating unit for performing an evaluation by comparing the evaluation index calculated by the evaluation index calculating unit and the evaluation condition; and an output unit for outputting an evaluation result obtained by the evaluating unit, wherein
the bearing position calculating unit includes a bearing height calculating unit for calculating a bearing height with respect to a height reference position; the shafting displacement calculating unit outputs a shaft displacement in each bearing; the evaluation index calculating unit includes a bearing load calculating unit for calculating a bearing load based on the shaft displacement, and the evaluating unit includes a bearing load evaluating unit for performing an evaluation by comparing the bearing load calculated by the evaluation index calculating unit with the evaluation condition.

Industrial Applicability

Since the shafting alignment evaluating method according to the present embodiment is arranged so as to use an evaluation map indicating allowable ranges of a crank deflection and a bearing load calculated in advance in accordance with the inclination of a crankshaft and the inclination of an intermediate shaft, the inclination of the respective shafts which fall within the allowable ranges can be readily known when, for example, installing an engine and propeller shafting in a hull. Thus, operating instructions on shafting alignment can be issued with extreme ease. In addition, in the case of a ship already in service, an evaluation of current shafting alignment can be readily performed.

**Claims**

1. A method for evaluating an alignment of drive shafting of a ship including a crankshaft of an engine, an intermediate shaft, and a propeller shaft, the evaluating method comprising:

   calculating a displacement at a predetermined portion of the drive shafting using a transfer matrix method based on an inclination of the crankshaft and an inclination of the intermediate shaft; and
   calculating a crank deflection of the crankshaft based on the displacement and evaluating the alignment of the drive shafting by comparing the calculated displacement with a preset evaluation condition.

2. A method for evaluating an alignment of drive shafting of a ship including a crankshaft of an engine, an intermediate shaft, and a propeller shaft, the evaluating method comprising:

   calculating a displacement at a predetermined portion of the drive shafting using a transfer matrix method based on an inclination of the crankshaft and an inclination of the intermediate shaft; and
   calculating a bearing load acting on each bearing based on the displacement and evaluating the alignment of the drive shafting by comparing the calculated bearing loads with a preset evaluation condition.

3. A method for evaluating an alignment of drive shafting of a ship including a crankshaft of an engine, an intermediate shaft, and a propeller shaft, the evaluating method comprising:

   calculating a displacement at a predetermined portion of the drive shafting using a transfer matrix method based on an inclination of the crankshaft and an inclination of the intermediate shaft; and
   calculating a crank deflection of the crankshaft and a bearing load acting on each bearing based on the displacement and evaluating the alignment of the drive shafting by comparing the calculated crank deflection and bearing loads with a preset evaluation condition.

4. A method for evaluating an alignment of drive shafting of a ship including a crankshaft of an engine, an intermediate shaft, and a propeller shaft, the evaluating method comprising:

   calculating a displacement at a predetermined portion of the drive shafting using a transfer matrix method based on an inclination of the crankshaft and an inclination of the intermediate shaft, and calculating a crank deflection of the crankshaft and a bearing load acting on each bearing based on the displacement; and
evaluating the alignment of the drive shafting using an evaluation map created by plotting the calculated crank deflection and bearing loads on two-dimensional coordinates having an inclination of the crankshaft and an inclination of the intermediate shaft corresponding to an evaluation condition as coordinate axes thereof.

5. An evaluating device for performing the evaluating method according to claim 1, the evaluating device comprising:

a data input unit for inputting specification data of drive shafting and data regarding an evaluation condition and an inclination of a crankshaft of an engine and an inclination of an intermediate shaft;
a bearing position calculating unit for calculating respective bearing positions in the drive shafting using the specification data;
a shafting displacement calculating unit for calculating a displacement at a predetermined portion of the drive shafting using a transfer matrix method, based on the bearing positions calculated by the bearing position calculating unit and the specification data;
an evaluation index calculating unit for calculating an evaluation index using the displacement calculated by the shafting displacement calculating unit;
an evaluating unit for performing an evaluation by comparing the evaluation index calculated by the evaluation index calculating unit and the evaluation condition; and
an output unit for outputting an evaluation result obtained by the evaluating unit, wherein
the bearing position calculating unit includes at least a bearing height calculating unit for calculating a bearing height with respect to a height reference position;
the shafting displacement calculating unit calculates a displacement of a portion corresponding to an intersection of a crank arm and a journal on the crankshaft;
the evaluation index calculating unit includes a crank deflection calculating unit for calculating a crank deflection based on the displacement of the portion corresponding to the intersection, and
the evaluating unit includes a crank deflection evaluating unit for performing an evaluation by comparing a crank deflection calculated as an evaluation index by the evaluation index calculating unit with the evaluation condition.

6. The evaluating device of a shafting alignment of a ship according to claim 5, wherein the bearing position calculating unit is provided with a bearing horizontal position calculating unit for calculating a horizontal position of a bearing with respect to a horizontal reference position.

7. An evaluating device for performing the evaluating method according to claim 2, the evaluating device comprising:

a data input unit for inputting specification data of drive shafting and data regarding an evaluation condition and an inclination of a crankshaft of an engine and an inclination of an intermediate shaft;
a bearing position calculating unit for calculating respective bearing positions in the drive shafting using the specification data;
a shafting displacement calculating unit for calculating a displacement at a predetermined portion of the crankshaft using the bearing positions calculated by the bearing position calculating unit and data regarding the crankshaft and the intermediate shaft among the specification data;
an evaluation index calculating unit for calculating an evaluation index using the displacement calculated by the shafting displacement calculating unit;
an evaluating unit for performing an evaluation by comparing the evaluation index calculated by the evaluation index calculating unit and the evaluation condition; and
an output unit for outputting an evaluation result obtained by the evaluating unit, wherein
the bearing position calculating unit includes a bearing height calculating unit for calculating a bearing height with respect to a height reference position;
the shafting displacement calculating unit outputs a shaft displacement within each bearing;
the evaluation index calculating unit includes a bearing load calculating unit for calculating a bearing load based on the shaft displacement, and
the evaluating unit includes a bearing load evaluating unit for performing an evaluation by comparing the bearing load calculated by the evaluation index calculating unit with the evaluation condition.

8. An evaluating device for performing the evaluating method according to claim 3, the evaluating device comprising:

a data input unit for inputting specification data of drive shafting and data regarding an evaluation condition and an inclination of a crankshaft of an engine and an inclination of an intermediate shaft;

a bearing position calculating unit for calculating respective bearing positions of the crankshaft, the intermediate shaft and a propeller shaft using the specification data;

a shafting displacement calculating unit for calculating a displacement at a predetermined portion of the crankshaft using the bearing positions calculated by the bearing position calculating unit and data regarding the crankshaft and the intermediate shaft among the specification data;

an evaluation index calculating unit for calculating an evaluation index using the displacement calculated by the shafting displacement calculating unit;

an evaluating unit for performing an evaluation by comparing the evaluation index calculated by the evaluation index calculating unit and the evaluation condition; and

an output unit for outputting an evaluation result obtained by the evaluating unit, wherein

the bearing position calculating unit includes a bearing height calculating unit for calculating a bearing height with respect to a height reference position;

the shafting displacement calculating unit outputs a displacement of a portion corresponding to an intersection of a crank arm and a journal as well as displacements of respective bearings,

the evaluation index calculating unit includes a crank deflection calculating unit for calculating a crank deflection based on the displacement of the portion corresponding to the intersection and a bearing load calculating unit for calculating a bearing load based on the displacements of the bearings, and

the evaluating unit includes a crank deflection evaluating unit and a bearing load evaluating unit for performing an evaluation by comparing a crank deflection and bearing loads calculated by the evaluation index calculating unit with respective evaluation conditions.

9. An evaluating device for performing the evaluating method according to claim 3, the evaluating device comprising:

a data input unit for inputting specification data of drive shafting and data regarding an evaluation condition and an inclination of a crankshaft of an engine and an inclination of an intermediate shaft;

a bearing position calculating unit for calculating respective bearing positions of the crankshaft, the intermediate shaft and a propeller shaft using the specification data;

a shafting displacement calculating unit for calculating a displacement at a predetermined portion of the crankshaft using the bearing positions calculated by the bearing position calculating unit and data regarding the crankshaft and the intermediate shaft among the specification data;

an evaluation index calculating unit for calculating an evaluation index using the displacement calculated by the shafting displacement calculating unit;

an evaluating unit for performing an evaluation by comparing the evaluation index calculated by the evaluation index calculating unit and the evaluation condition; and

an output unit for outputting an evaluation result obtained by the evaluating unit, wherein

the bearing position calculating unit includes a bearing height calculating unit for calculating a bearing height with respect to a height reference position and a bearing horizontal position calculating unit for calculating a horizontal position of a bearing with respect to a horizontal reference position,

the shafting displacement calculating unit outputs a displacement of a portion corresponding to an intersection of a crank arm and a journal as well as displacements of respective bearings,

the evaluation index calculating unit includes a crank deflection calculating unit for calculating vertical and horizontal crank deflections based on the displacement of the portion corresponding to the intersection and a bearing load calculating unit for calculating a bearing load based on the displacements of the bearings, and

the evaluating unit includes a crank deflection evaluating unit for performing an evaluation by comparing the vertical and horizontal crank deflections calculated by the evaluation index calculating unit with respective evaluation conditions and a bearing load evaluating unit for performing an evaluation by comparing the bearing load calculated by the evaluation index calculating unit with an evaluation condition.

10. The evaluating device of a shafting alignment of a ship according to any one of claims 5 to 9, wherein at least a printing unit or a display screen unit of the data input unit and the output unit is provided at a terminal, and other components are provided at a server device connected to the terminal via a network.

11. The evaluating device of a shafting alignment of a ship according to any one of claims 5 to 9, wherein the bearing position calculating unit includes a combination generating unit for generating, when the data regarding the inclination of the crankshaft and the inclination of the intermediate shaft are respectively inputted as numerical ranges, combination data of the inclination within the numerical ranges and calculates a bearing position for a combinati.on of the inclination generated by the combination generating unit, and

the output unit includes an evaluation map creating unit for outputting an evaluation map which displays an evaluation result of each inclination combination on a plane of two-dimensional coordinates.

FIG. 1

Fore

y
x
z

Aft

11
14
13
12
12

1
2
3
4
5
6
7

1

5A
5A
5A

1

2

3

4

5A
5A
5A
5A
5A
5A
5A
5A
5B
5C
5D

5A #1 #2 #3 #4 #5 #6 #7 #8 #9 #10 #11 #12 #13

EP 2 088 074 A1

FIG. 2

(LOCAL)

(GLOBAL)

Fore    Aft

FIG. 3

F :reciprocating weight

Connecting rod

Crank throw

Journal

Top

θ

γ

y
Port

Starboard

F/cos γ

Journal weight

Bottom    Throw weight

z

FIG. 4

## FIG. 5A

SHAFTING MODEL

#1 #2 #3 #4 #5 #6 #7 #8 #9 #10 #11 #12

CRANKSHAFT    INTERMEDIATE SHAFT    PROPELLER SHAFT

## FIG. 5B

SHAFTING ALIGNMENT

$H_{ef}$    $V_{sag}$    $\theta_e$    $H_{ca}$    $\theta_i$    $H_i$

INITIAL SAG : $V_{sag}$

$L_e$    $L_i$

$L_v$

P1    P2    P3    P4

## FIG. 5C

DOUBLE BOTTOM

HULL SAG    D

P1    P2    P3    P4

## FIG. 5D

THERMAL EXPANSION

DEFORMATION OF ENGINE    $H_T$

P1    P2    P3    P4

LENGTH OF ENGINE ROOM DOUBLE BOTTOM

FIG. 6A

FIG. 6B

EP 2 088 074 A1

## FIG. 7

STEP 1

INPUT SPECIFICATION DATA SUCH AS
DIMENSION AND LOAD OF CRANKSHAFT
AND PROPULSION SHAFTING, AND INITIAL
HEIGHT OF BEARING

STEP 2

CALCULATE STATE QUANTITY (DISPLACEMENT
AND ACTING FORCE) AT EACH PORTION USING
TRANSFER MATRIX METHOD

STEP 3

IS GAP BETWEEN SHAFT
AND BEARING METAL WITHIN ALLOWABLE
VALUE OR NOT? $0 < d_z - d_{z0} < C$

Yes → STEP 4

SPRING CONSTANT OF
BEARING = 0

No

STEP 5

CALCULATE CRANK DEFLECTION
AND BEARING LOAD

STEP 6

DETERMINE ON WHICH EVALUATION LEVEL
EACH CALCULATED VALUE FALLS

STEP 7

CREATE AND OUTPUT EVALUATION MAP

## FIG. 8A

HULL SAG 0 mm/COLD STATE

(0)  (1)  (2)  (3)

INITIAL INCLINATION OF INTERMEDIATE SHAFT $\theta_i$ mrad

0.0
-0.5
-1.0
-1.5
-2.0
-2.5
-3.0
-3.5
-4.0
-4.5
-5.0

-4.0  -3.0  -2.0  -1.0  0.0
-4.5  -3.5  -2.5  -1.5  -0.5

INITIAL INCLINATION OF ENGINE $\theta_e$ mrad

## FIG. 8B

HULL SAG 0 mm/HOT STATE

(0)  (1)  (2)  (3)

INITIAL INCLINATION OF INTERMEDIATE SHAFT $\theta_i$ mrad

0.0
-0.5
-1.0
-1.5
-2.0
-2.5
-3.0
-3.5
-4.0
-4.5
-5.0

-4.0  -3.0  -2.0  -1.0  0.0
-4.5  -3.5  -2.5  -1.5  -0.5

INITIAL INCLINATION OF ENGINE $\theta_e$ mrad

## FIG. 8C

HULL SAG 1 mm/HOT STATE

INITIAL INCLINATION OF ENGINE $\theta_c$ mrad

INITIAL INCLINATION OF INTERMEDIATE SHAFT $\theta_i$ mrad

## FIG. 8D

HULL SAG 2 mm/HOT STATE

INITIAL INCLINATION OF ENGINE $\theta_c$ mrad

INITIAL INCLINATION OF INTERMEDIATE SHAFT $\theta_i$ mrad

FIG. 8E

HULL SAG 3 mm/HOT STATE

INITIAL INCLINATION OF INTERMEDIATE SHAFT $\theta_i$ mrad

INITIAL INCLINATION OF ENGINE $\theta_e$ mrad

FIG. 8F

HULL SAG 4 mm/HOT STATE

INITIAL INCLINATION OF INTERMEDIATE SHAFT $\theta_i$ mrad

INITIAL INCLINATION OF ENGINE $\theta_e$ mrad

FIG. 8G

FIG. 8H

FIG. 9

FIG. 10A

HULL SAG 0 mm/COLD STATE

FIG. 10B

HULL SAG 0 mm/HOT STATE

## FIG. 10C

HULL SAG 1 mm/HOT STATE

## FIG. 10D

HULL SAG 2 mm/HOT STATE

## FIG. 10E

HULL SAG 3 mm/HOT STATE

INITIAL INCLINATION OF ENGINE $\theta_e$ mrad

INITIAL INCLINATION OF INTERMEDIATE SHAFT $\theta_i$ mrad

## FIG. 10F

HULL SAG 4 mm/HOT STAT

INITIAL INCLINATION OF ENGINE $\theta_e$ mrad

INITIAL INCLINATION OF INTERMEDIATE SHAFT $\theta_i$ mrad

## FIG. 10G

HULL SAG 5 mm/HOT STATE

(0) ‚ (1) ‚

INITIAL INCLINATION OF INTERMEDIATE SHAFT $\theta_i$ mrad

INITIAL INCLINATION OF ENGINE $\theta_e$ mrad

## FIG. 10H

HULL SAG 6 mm/HOT STATE

(0) ‚ (1) ‚

INITIAL INCLINATION OF INTERMEDIATE SHAFT $\theta_i$ mrad

INITIAL INCLINATION OF ENGINE $\theta_e$ mrad

FIG. 11

FIG. 12

FIG. 13

FIG. 14

```
┌─────────────────────────────────────────────────────────────┐
│                      DATA INPUT UNIT                      ┌─31│
│  SPECIFICATION DATA, CRANKSHAFT INCLINATION θc (RANGE),      │
│      INTERMEDIATE SHAFT INCLINATION θi (RANGE)              │
└─────────────────────────────────────────────────────────────┘
```

BEARING POSITION CALCULATING UNIT — 41, 42, 32

COMBINATION GENERATING UNIT — 41

HEIGHT CALCULATING UNIT — 42

HORIZONTAL DIRECTION CALCULATING UNIT — 43

33

SHAFTING DISPLACEMENT CALCULATING UNIT (CALCULATE DISPLACEMENTS OF EACH INTERSECTION AND SHAFT $d_x, d_y, d_z$)

34

EVALUATION INDEX CALCULATING UNIT — 45, 46

CRANK DEFLECTION CALCULATING UNIT — 45

BEARING LOAD CALCULATING UNIT — 46

35

EVALUATING UNIT — 51, 52

CRANK DEFLECTION EVALUATING UNIT — 51

BEARING LOAD EVALUATING UNIT — 52

COMPREHENSIVE EVALUATION UNIT — 53

36

OUTPUT UNIT — 55

EVALUATION MAP CREATING UNIT — 55

SERVER-SIDE FUNCTIONS

OUTPUT (EVALUATION RESULT ONLY, OUTPUT OF EVALUATION RESULT AND INITIAL VALUES $d_{z0}, d_{y0}$ AT THAT POINT, OUTPUT OF MAP)

FIG. 15

## INTERNATIONAL SEARCH REPORT

| | International application No. |
|---|---|
| | PCT/JP2006/320734 |

**A. CLASSIFICATION OF SUBJECT MATTER**
*B63B9/00(2006.01)i*

According to International Patent Classification (IPC) or to both national classification and IPC

**B. FIELDS SEARCHED**

Minimum documentation searched (classification system followed by classification symbols)
B63B9/00, G01B21/24

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-19997 A (Hitachi Zosen Corp.), 21 January, 2003 (21.01.03), Full text; all drawings & WO 2002/090884 A1    & EP 1310763 A1 | 1-11 |
| A | JP 2001-39382 A (Hitachi Zosen Corp.), 13 February, 2001 (13.02.01), Full text; all drawings (Family: none) | 1-11 |

☐ Further documents are listed in the continuation of Box C.     ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 16 February, 2007 (16.02.07) | 27 February, 2007 (27.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003019997 A

**Non-patent literature cited in the description**

- **J. Stefenson.** Utveckling av Berakningsmetoder och Instllationskriterier for Medelvarvsmotoranlaggningari Fartyg. *NSTM74 Stockholm,* 1974

- **H. Sakai ; Y. Kanda.** A Simple Estimation Method of Double Bottom Deformation. *Journal of the Faculty of Engineering,* 1918, vol. XXXIV (4), 589-600